(19) Europäisches Patentamt
European Patent Office
Office européen des brevets

(11) EP 4 553 109 A1

(12) EUROPEAN PATENT APPLICATION
published in accordance with Art. 153(4) EPC

(43) Date of publication:
**14.05.2025 Bulletin 2025/20**

(21) Application number: **23850324.7**

(22) Date of filing: **26.07.2023**

(51) International Patent Classification (IPC):
***C08K 13/02*** (2006.01) ***C08K 5/5435*** (2006.01)
***C08K 3/013*** (2018.01) ***C08K 3/26*** (2006.01)
***C08K 3/28*** (2006.01) ***C08K 5/10*** (2006.01)
***C08K 5/00*** (2006.01) ***C08K 5/13*** (2006.01)
***C08K 5/49*** (2006.01) ***C08L 67/02*** (2006.01)

(52) Cooperative Patent Classification (CPC):
**C08K 3/013; C08K 3/26; C08K 3/28; C08K 5/00; C08K 5/10; C08K 5/13; C08K 5/49; C08K 5/5435; C08K 13/02; C08L 67/02**

(86) International application number:
**PCT/KR2023/010801**

(87) International publication number:
**WO 2024/029818 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.08.2022 KR 20220096397**
**29.11.2022 KR 20220163329**
**25.07.2023 KR 20230096886**

(71) Applicant: **SK leaveo Co., Ltd.**
**Gyeonggi-do 16338 (KR)**

(72) Inventors:
- **LEE, Deuk-Young**
  **Seoul 03142 (KR)**
- **CHOI, Yujin**
  **Seoul 03142 (KR)**
- **KIM, Sangmin**
  **Seoul 03142 (KR)**

(74) Representative: **Isarpatent**
**Patent- und Rechtsanwälte**
**Barth Hassa Peckmann & Partner mbB**
**Friedrichstraße 31**
**80801 München (DE)**

# (54) BIODEGRADABLE RESIN COMPOSITION AND BIODEGRADABLE MOLDED ARTICLE COMPRISING SAME

(57) The present invention relates to a biodegradable resin composition and a biodegradable molded article comprising same. The biodegradable resin composition comprises: a biodegradable resin; an inorganic filler; and at least one selected from the group consisting of iron, magnesium, manganese, and calcium, wherein the amount of the inorganic filler is at least 30 wt% based on the total weight of the biodegradable resin composition.



Processed by Luminess, 75001 PARIS (FR)

(Cont. next page)

【FIG. 1】

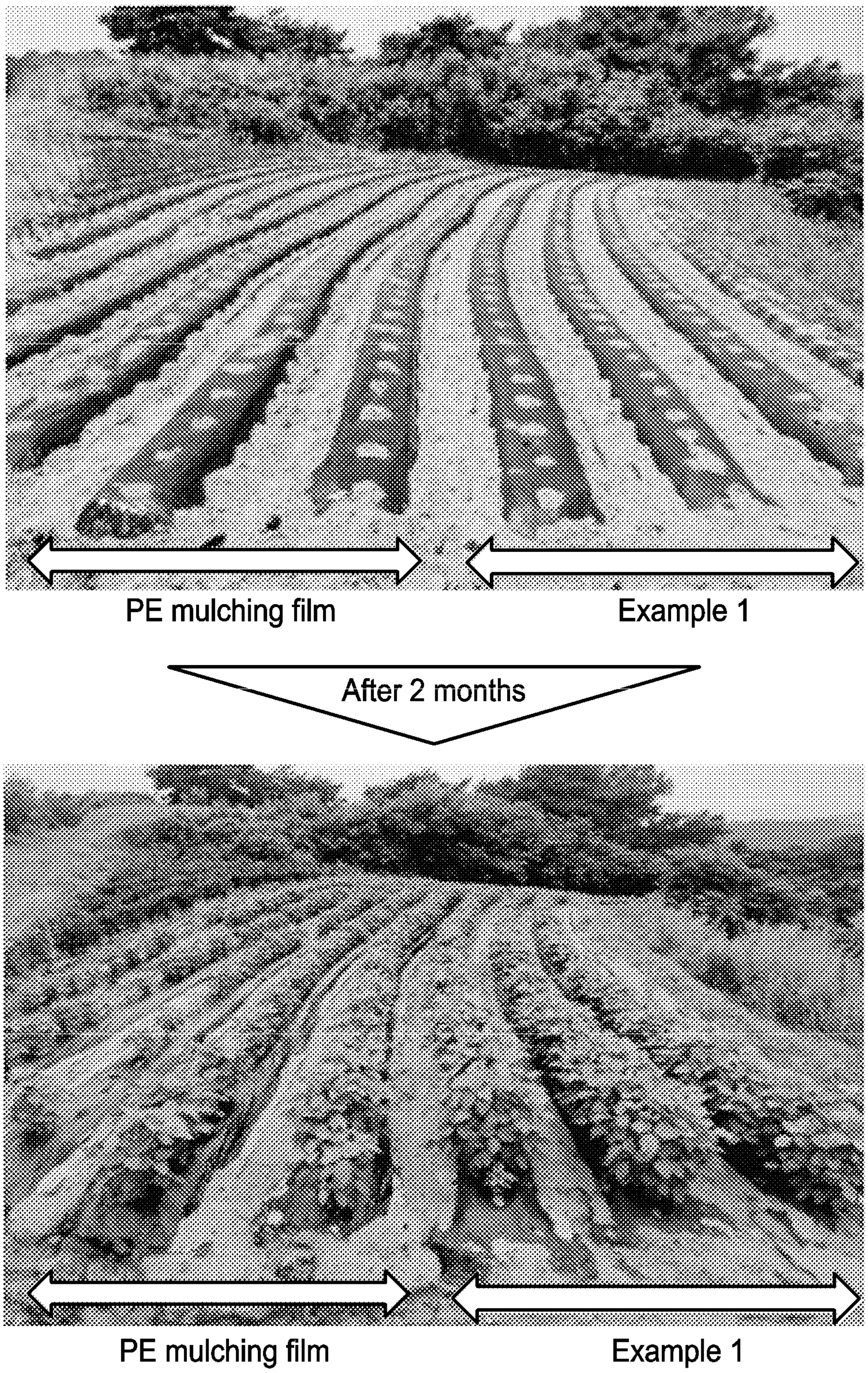
PE mulching film
Example 1
After 2 months
PE mulching film
Example 1

## Description

[Technical Field]

The present invention relates to a biodegradable resin composition and a biodegradable molded article including the same.

[Background Art]

Recently, as concerns about environmental problems have increased, solutions to the disposal problems of various household goods, especially disposable products, are required. Specifically, petroleum-based polymer materials are inexpensive and have excellent processability, so they are widely used to manufacture various products such as films, fibers, packaging materials, bottles, and containers. However, products made from the petroleum-based polymer materials emit harmful substances when incinerated at the end of their lifespan. In addition, depending on the types of products, it takes hundreds of years to completely decompose naturally.

To overcome these limitations of petroleum-based polymer materials, research is being actively conducted on biodegradable resins that decompose in a relatively short period. Polylactic acid (PLA), polybutylene adipate terephthalate (PBAT), and polybutylene succinate (PBS) are being introduced as biodegradable resins.

However, PLA lacks flexibility, and PBAT has poor mechanical properties, so the uses thereof are limited. To improve these problems, in US Patent No. 9096758, PBAT mixed with a small amount of inorganic filler was used as a biodegradable resin composition, but when the biodegradable resin was used for agricultural purposes, there were limitations in terms of biodegradation time and soil environment improvement.

[Disclosure]

[Technical Problem]

Therefore, the present invention has been made in view of the above problems, and it is one object of the present invention to provide a biodegradable resin composition that has improved biodegradability, can induce soil fertility and has no discoloration; and a biodegradable molded article including the biodegradable resin composition.

It is another object of the present invention to provide a biodegradable resin composition having an appropriate initial hydrolysis degree when exposed to moisture, a high hydrolysis degree in water when discarded, and a high biodegradability degree; and a biodegradable molded article including the biodegradable resin composition.

[Technical Solution]

In accordance with an aspect of the present invention, the above and other objects can be accomplished by the provision of a biodegradable resin composition, comprising: a biodegradable resin; an inorganic filler; and one or more selected from the group consisting of iron, magnesium, manganese and calcium, wherein a content of the inorganic filler is 30 wt% or more based on a total weight of the biodegradable resin composition.

In an embodiment of the present invention, the biodegradable resin composition may further comprise one or more selected from the group consisting of aluminum, cobalt, potassium, sodium, and phosphorus.

In an embodiment of the present invention, a content of the iron may be 1 ppm to 200 ppm based on the total weight of the biodegradable resin composition.

In an embodiment of the present invention, a content of the magnesium may be 100 ppm or more based on the total weight of the biodegradable resin composition.

In an embodiment of the present invention, a content of the manganese may be 3 ppm or more based on the total weight of the biodegradable resin composition.

In an embodiment of the present invention, a content of the calcium may be $1\times10^5$ ppm or more based on the total weight of the biodegradable resin composition.

In an embodiment of the present invention, a content of the cadmium in the biodegradable resin composition may be less than 1 ppm based on the total weight of the biodegradable resin composition.

In accordance with another aspect of the present invention, there is provided a biodegradable resin composition, comprising: a biodegradable resin; an inorganic filler; a metal salt; and an anti-hydrolysis agent, wherein a content of the inorganic filler is 30 wt% or more based on the total weight of the biodegradable resin composition.

In an embodiment of the present invention, the metal salt may include iron.

In an embodiment of the present invention, the anti-hydrolysis agent may include silicon.

In an embodiment of the present invention, a content of the silicon may be 1 ppm to 300 ppm based on a total

weight of the biodegradable resin composition.

In an embodiment of the present invention, a hydrolysis degree after 1 week of the biodegradable resin composition may be 35 % to 60 %, a hydrolysis degree after 3 weeks thereof may be 85 % or more, and the hydrolysis degree after 1 week and the hydrolysis degree after 3 weeks may be measured by Measurement Method 1 below:

[Measurement Method 1]

The hydrolysis degree after 1 week is a reduction rate compared to an initial number average molecular weight of the biodegradable resin composition when the biodegradable resin composition is placed for 1 week under high-temperature and high-humidity conditions of 80 °C and 100% humidity, and

the hydrolysis degree after 3 weeks is a reduction rate compared to the initial number average molecular weight of the biodegradable resin composition when the biodegradable resin composition is placed for 3 weeks under high-temperature and high-humidity conditions of 80 °C and 100% humidity.

In accordance with still another aspect of the present invention, there is provided a biodegradable molded article, comprising: a biodegradable resin; an inorganic filler; and one or more selected from the group consisting of iron, magnesium, manganese and calcium, wherein a content of the inorganic filler is 30 wt% or more based on a total weight of the biodegradable resin composition.

In an embodiment of the present invention, the biodegradable molded article may be a soil fertilization material.

In accordance with yet another aspect of the present invention, there is provided a biodegradable molded article, comprising: a biodegradable resin; an inorganic filler; a metal salt; and an anti-hydrolysis agent, wherein a content of the inorganic filler is 30 wt% or more based on a total weight of the biodegradable resin composition.

[Advantageous effects]

A biodegradable resin composition according to the present invention and a biodegradable molded article including the same include minerals capable of improving the soil environment, thereby being capable of inducing soil fertility.

In addition, when the biodegradable molded article according to the present invention is used as a soil fertilization material, a step of spreading fertilizer on the soil can be omitted, the labor of crop cultivation can be reduced, and a final crop production amount can be increased.

In addition, when the biodegradable molded article according to the present invention is used as a soil-packaging material, acid components generated during biodegradation are neutralized by minerals, thereby preventing acidification of the soil.

In addition, as the biodegradable resin composition according to the present invention and the biodegradable molded article including the same include minerals, a biodegradability degree can be further improved.

In addition, the biodegradable molded article according to the present invention does not cause discoloration such as yellowing, thereby improving the quality of products.

Since the biodegradable polyester resin composition according to the present invention includes a silicon-based anti-hydrolysis agent, it can have hydrophobic characteristics and an appropriate hydrolysis degree.

The biodegradability degree of the biodegradable resin composition according to the present invention can be improved by a metal salt. In addition, the late hydrolysis degree of the biodegradable resin composition may be improved by a metal salt. That is, the biodegradable resin composition may have an appropriate metal content and an appropriate silicon element content. Accordingly, the biodegradable resin composition can be easily biodegraded after being used while having improved properties during its actual use period.

The biodegradable resin composition according to the present invention can be efficiently applied to packaging films, and the like. That is, a film manufactured from the biodegradable resin composition can be used for general purposes such as packaging. Here, the biodegradable resin composition can initially have a low hydrolysis degree, and the biodegradable film can maintain a certain degree or more of mechanical and chemical properties during a typical period of use by users. At the same time, since the biodegradable resin composition has a high biodegradability degree, a film manufactured from the biodegradable resin composition can be easily decomposed when discarded after use.

[Description of Drawings]

FIG. 1 illustrates soil fertilization evaluation results of a film according to Example 1-1 and a polyethylene mulching film.

[Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless otherwise specified.

In the present specification or application, 'iron', 'magnesium', 'manganese', 'calcium', 'cadmium', 'aluminum', 'cobalt', 'potassium', 'sodium', 'phosphorus', 'silicon' should be understood to refer to 'iron element', 'magnesium element', 'manganese element', 'calcium element', 'cadmium element', 'aluminum element', 'cobalt element', 'potassium element', 'sodium element', 'phosphorus element', and 'silicon element', respectively.

Hereinafter, a biodegradable resin composition according to the present invention and a biodegradable molded article including the same are described.

The biodegradable resin composition according to the present invention may include a biodegradable resin, an inorganic filler, and one or more selected from the group consisting of iron, magnesium, manganese and calcium, and the content of the inorganic filler may be 30 wt% or more based on a total weight of the biodegradable resin composition.

The biodegradable resin composition according to the present invention may include a biodegradable resin, an inorganic filler, a metal salt, and an anti-hydrolysis agent, and the content of the inorganic filler may be 30 wt% or more based on the total weight of the biodegradable resin composition.

The biodegradable resin composition may include a biodegradable resin.

The biodegradable resin may be a resin that is easily decomposed by microorganisms in the soil. The biodegradable resin may include a biodegradable polyester resin. The biodegradable polyester resin may include a diol ingredient and a dicarboxylic acid ingredient. Specifically, the biodegradable resin may include a first repeat unit and a second repeat unit. The first repeat unit may include a diol ingredient and an aromatic dicarboxylic acid ingredient, and the second repeat unit may include a diol ingredient and an aliphatic dicarboxylic acid ingredient.

The diol ingredient may include 1,4-butanediol or a derivative thereof. Based on the total mol number of the diol ingredient, the diol ingredient may include 1,4-butanediol or a derivative thereof in an amount of 95 mol% or more, 97 mol% or more, 98 mol% or more, 99 mol% or more, or 100 mol%. The diol ingredient may improve biodegradability, flexibility, and strength by including 1,4-butanediol or a derivative thereof. When the diol ingredient consists only of 1,4-butanediol, the improvement in biodegradability and strength may be maximized.

The diol ingredient may further include a second diol that is different from the first diol, which is 1,4-butanediol or a derivative thereof. The second diol may include one or more selected from the group consisting of propanediol, hexanediol, cyclohexanedimethanol, and ethylene glycol. Specifically, the second diol may include one or more selected from the group consisting of 1,3-propanediol, 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol. Based on the total mol number of the diol ingredient, the diol ingredient may include the second diol in an amount of 5 mol% or less, 3 mol% or less, 2 mol% or less, or 1 mol% or less.

The aromatic dicarboxylic acid ingredient may include one or more selected from the group consisting of terephthalic acid, dimethyl terephthalic acid, and derivatives thereof. Specifically, the aromatic dicarboxylic acid ingredient may be terephthalic acid or dimethyl terephthalic acid. Based on a total mol number of the dicarboxylic acid ingredient, the dicarboxylic acid ingredient may include the aromatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The aliphatic dicarboxylic acid ingredient may include one or more selected from the group consisting of adipic acid, succinic acid, and derivatives thereof. Specifically, the aliphatic dicarboxylic acid ingredient may be adipic acid or succinic acid. Based on a total mol number of the dicarboxylic acid ingredient, the dicarboxylic acid ingredient may include the aliphatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The molar ratio of the aromatic dicarboxylic acid ingredient to the aliphatic dicarboxylic acid ingredient may be 0.5 to 1.5:1, 0.7 to 1.3:1, or 0.8 to 1.2:1.

The molar ratio of the diol ingredient to the dicarboxylic acid ingredient may be 0.5 to 2:1, 0.5 to 1.8:1, 0.7 to 1.5:1,

or 0.9 to 1.2:1. When the range is satisfied, the biodegradability, strength, and processability of the biodegradable resin composition may be improved without discoloration such as yellowing.

The biodegradable resin may include polybutylene adipate terephthalate (PBAT), in which the first repeat unit may include a diol ingredient and an aromatic dicarboxylic acid ingredient and the second repeat unit may include a diol ingredient and an aliphatic dicarboxylic acid ingredient.

Specifically, the polybutylene adipate terephthalate may include a unit represented by Chemical Formula 1 below:

[Chemical Formula 1]

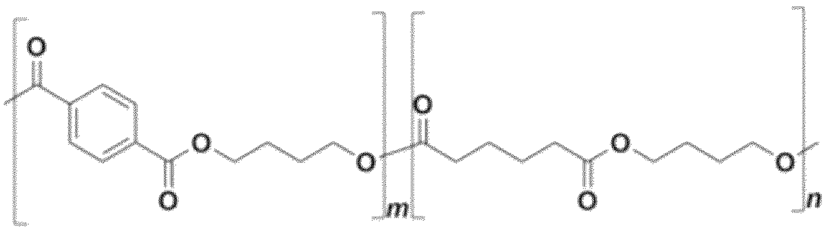

In Chemical Formula 1, m may be 1 to 20, and n may be 1 to 20.

The biodegradable resin composition may include a heterogeneous biodegradable resin in addition to the polybutylene adipate terephthalate. For example, the heterogeneous biodegradable resin may include one or more selected from the group consisting of polybutylene azelate terephthalate (PBAzT), polybutylene sebacate terephthalate (PBSeT), polybutylene succinate terephthalate (PBST), polyhydroxyalkanoate (PHA), and polylactic acid (PLA). The heterogeneous biodegradable resin may complement the mechanical properties of the polybutylene adipate terephthalate.

The polylactic acid may be a polylactic acid that has stereocomplex crystals and a high melting point. In addition, the polylactic acid may be formed by solution mixing or melt mixing of poly L-lactic acid and poly D-lactic acid.

Specifically, the polylactic acid may include a unit represented by Chemical Formula 2 below:

[Chemical Formula 2]

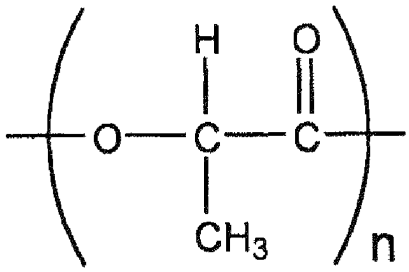

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of about 90 mol% to about 100 mol%, about 95 mol% to about 100 mol%, or about 97 mol% to about 100 mol%. The poly L-lactic acid may include the D-lactic acid unit and/or a unit other than lactic acid. The poly L-lactic acid may include the D-lactic acid unit and/or a unit other than lactic acid in an amount of about 0 mol% to about 10 mol%, about 0 mol% to about 5 mol%, or about 0 mol% to about 3 mol%.

The poly D-lactic acid may be a polymer including primarily the D-lactic acid unit. The poly D-lactic acid may include the D-lactic acid unit in an amount of about 90 mol% to about 100 mol%, about 95 mol% to about 100 mol%, or about 97 mol% to about 100 mol%. The poly D-lactic acid may include the L-lactic acid unit and/or a unit other than lactic acid. The poly D-lactic acid may include the L-lactic acid unit and/or a unit other than lactic acid in an amount of about 0 mol% to about 10 mol%, about 0 mol% to about 5 mol%, or about 0 mol% to about 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various

components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entirety of which is incorporated in the present invention by reference for all purposes.

The polyhydroxyalkanoate may include a unit represented by Chemical Formula 3 below:

[Chemical Formula 3]

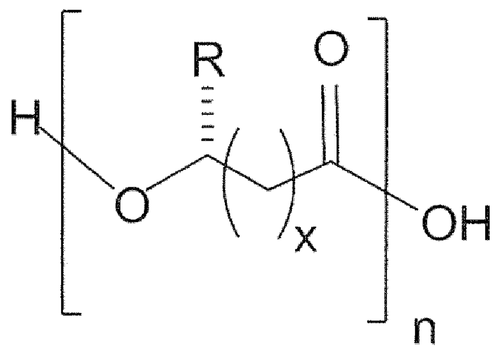

In Chemical Formula 3, R may be independently selected from the group consisting of a hydrogen atom, a hydrocarbon group, a hetero atom, and combinations thereof, n may be the number of repeat units from 1 to 35,000, and x may be an integer from 1 to 5.

The polyhydroxyalkanoate may be a homopolymer or copolymer consisting of at least one moiety selected from the group consisting of 3-hydroxypropionate, 3-hydroxybutyrate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate, 3-hydroxydodecanoate, and combinations thereof. In addition, the at least one moiety may have the same or different numbers of repeat units.

The polyhydroxyalkanoate may be a copolymer containing a 3-hydroxybutyrate unit and a 3-hydroxyhexanoate unit as main constituent units.

The polyhydroxyalkanoate may include 80 mol% or more of the 3-hydroxybutyrate unit as a component. The polyhydroxyalkanoate may include the 3-hydroxybutyrate unit in an amount of about 85 mol% or more.

The polyhydroxyalkanoate may be a poly(3-hydroxybutyrate-co-3-hydroxyhexanoate) copolymer resin or a poly(3-hydroxybutyrate-co-3-hydroxyvalerate-co-3-hydroxyhexanoate) copolymer resin.

For example, the polyhydroxyalkanoate may be produced using a microorganism such as Alcaligenes eutrophus AC 32 (International deposit based on the Budapest Treaty, International depositary authority: Independent Administrative Corporation Industrial Technology Research Institute Patent Biological Deposit Center (Central No. 6, 1-1, Tsukubashi, Ibaraki Prefecture, Japan), Original deposit date: August 12, 1996, Transferred on August 7, 1997, Deposit number: FERM BP-6038, Transferred from original deposit FERM P-15786, J. Bacteriol., 179, 4821 (1997)) created by introducing an Aeromonas caviae-derived PHA synthesizing enzyme gene into Alcaligenes eutrophus.

The polyhydroxyalkanoate may be available commercially. The commercially available products of the polyhydroxyalkanoate may include ┌NODAX┘of Danimer Co., ┌ENMAT┘ of Tianan Biopolymer Co., ┌PHACT┘ of CJ Co., and ┌Aonilex (registered trademark) X131N┘, ┌Aonilex (registered trademark) X131A┘, ┌Aonilex (registered trademark) 151A┘, ┌Aonilex (registered trademark) 151C┘, ┌PHBH (registered trademark) X331N┘, ┌PHBH (registered trademark) X131A┘, ┌PHBH (registered trademark) 151A┘, and ┌PHBH (registered trademark) 151C┘ of Kaneka Co.

Based on the total weight of the biodegradable resin composition, the biodegradable resin may be included in an amount of less than 90 wt%, less than 85 wt%, 10 wt% or more and less than 85 wt%, 10 wt% or more and less than 80 wt%,

10 wt% or more and less than 70 wt%, 20 wt% or more and less than 70 wt%, 25 wt% or more and less than 70 wt%, 28.2 wt% or more and less than 70 wt%, or 28.2 wt% or more and 68.8 wt% or less. When the range is satisfied, hydrolysis resistance may be significantly improved without deterioration in mechanical properties.

The biodegradable resin composition may include an inorganic filler.

Based on the total weight of the biodegradable resin composition, the inorganic filler may be included in an amount of 30 wt% or more, 35 wt% or more, 40 wt% or more, 45 wt% or more, 50 wt% or more, 55 wt% or more, 60 wt% or more, 65 wt% or more, 70 wt% or more, 75 wt% or more, 80 wt% or more, 30 wt% or more and 85 wt% or less, 30 wt% or more and 80 wt% or less, 30 wt% or more and 75 wt% or less, 30 wt% or more and 70 wt% or less, 35 wt% or more and 85 wt% or less, 35 wt% or more and 80 wt% or less, 35 wt% or more and 75 wt% or less, 35 wt% or more and 70 wt% or less, 40 wt% or more and 85 wt% or less, 40 wt% or more and 80 wt% or less, 40 wt% or more and 75 wt% or less, 40 wt% or more and 70 wt% or less, 45 wt% or more and 85 wt% or less, 45 wt% or more and 80 wt% or less, 45 wt% or more and 75 wt% or less, 45 wt% or more and 70 wt% or less, 50 wt% or more and 85 wt% or less, 50 wt% or more and 80 wt% or less, 50 wt% or more and 75 wt% or less, or 50 wt% or more and 70 wt% or less. when a biodegradable molded article manufactured from the biodegradable resin composition is used as a soil fertilization material in the ranges, the coordination between the inorganic filler and the soil may be improved, thereby increasing the biodegradation starting point of the biodegradable molded article without reducing the stability of the biodegradable molded article due to a rapid increase in biodegradability. In addition, the specific gravity of the biodegradable molded article does not increase significantly, allowing the biodegradable molded article to be used in a wider variety of products. In addition, the elongation and strength of a product may be maintained, ensuring product reliability. Further, it may have a low initial hydrolysis degree and a high final biodegradability degree.

The inorganic filler may have a specific surface area of 0.1 $m^2/g$ to 10.0 $m^2/g$, 0.1 $m^2/g$ to 9.0 $m^2/g$, 0.1 $m^2/g$ to 8.0 $m^2/g$, 0.1 $m^2/g$ to 7.0 $m^2/g$, 0.1 $m^2/g$ to 6.0 $m^2/g$, 0.1 $m^2/g$ to 5.0 $m^2/g$, 0.1 $m^2/g$ to 4.0 $m^2/g$, or 0.1 $m^2/g$ to 3.0 $m^2/g$. The specific surface area may be measured using a nitrogen gas adsorption method. When the range is satisfied, the biodegradability of the biodegradable resin may be increased, and the processability of the biodegradable resin may be improved.

The inorganic filler may have an average particle diameter of 0.1 μm to 10.0 μm, 0.1 μm to 9.0 μm, 0.1 μm to 8.0 μm, 0.1 μm to 7.0 μm, 0.1 μm to 6.0 μm, 0.1 μm to 5.0 μm, 0.1 μm to 4.0 μm, 0.1 μm to 3.0 μm, 1.0 μm to 5.0 μm, 1.0 μm to 4.0 μm, or 1.0 μm to 3.0 μm. The average particle diameter may be calculated based on the measurement results of a specific surface area by an air permeation method using a specific surface area measuring device. When the range is satisfied, an increase in viscosity may be prevented when mixing the biodegradable resin and the inorganic filler, and particle size uniformity may be improved.

The inorganic filler may have a sphericity of 0.30 to 0.95, 0.30 to 0.93, 0.30 to 0.90, 0.50 to 0.95, 0.50 to 0.93, 0.50 to 0.90, 0.60 to 0.95, 0.60 to 0.93, or 0.60 to 0.90. When the range is satisfied, biodegradability may be improved by containing many fine pores generated at the interface between the biodegradable resin and the inorganic filler. In addition, the strength and molding processability of a molded article may be increased.

The inorganic filler may include calcium carbonate ($CaCO_3$). In general, when a molded article manufactured using a biodegradable resin composition biodegrades, acid components may be generated. The acid components and the calcium carbonate may react to generate $CO_2$ and $H_2O$, so the biodegradation rate of the molded article into molecular units may be further increased. In addition, the calcium carbonate may neutralize the acid components, reducing environmental load and preventing acidification of the soil.

The calcium carbonate may be heavy calcium carbonate obtained by mechanically grinding or classifying natural calcium carbonate containing $CaCO_3$ as a main ingredient, such as limestone, chalk, marble, shell, and coral.

The calcium carbonate may be surface-treated with an organic acid. By surface-treating the calcium carbonate with the organic acid, the dispersibility of the biodegradable resin composition may be increased and reactivity with the biodegradable resin may be improved. The surface treatment may be performed through a physical method such as plasma treatment and corona treatment or through a chemical method using a chemical agent such as a silane coupling agent, a titanium coupling agent, and a surfactant. The organic acid may include a higher fatty acid, a higher fatty acid ester, a higher fatty acid amide, and a higher fatty acid, for example, calcium stearate.

The surface-treated calcium carbonate may be prepared by the following method.

First, calcium carbonate powder is prepared through a grinding process. Then, the calcium carbonate powder is classified to obtain calcium carbonate of a desired particle size.

Then, the calcium carbonate is heated at about 200 °C to about 800 °C using a heating device selected from a kiln, an electric furnace, or a microwave. The heat treatment time may be about 5 minutes to about 30 minutes, about 7 minutes to about 15 minutes, or about 7 minutes to about 14 minutes. The heat treatment temperature may be about 250 °C to about 700 °C or about 300 °C to about 600 °C. By heat treating the calcium carbonate under the conditions described above, moisture in the calcium carbonate may be easily removed, the organic acid may be easily bonded to the surface of the calcium carbonate, and agglomeration of the calcium carbonate may be minimized.

Next, a process of treating the surface of the calcium carbonate may be performed by adding an organic acid to

the heat-treated calcium carbonate. The process temperature may be 70 °C to about 130 °C. Based on 100 parts by weight of the calcium carbonate, the organic acid may be added in an amount of about 0.5 parts by weight to about 5 parts by weight, about 0.5 parts by weight to about 4 parts by weight, about 0.5 parts by weight to about 3 parts by weight, about 0.5 parts by weight to about 2 parts by weight, about 0.6 parts by weight to about 5 parts by weight, about 0.6 parts by weight to about 4 parts by weight, about 0.6 parts by weight to about 3 parts by weight, about 0.6 parts by weight to about 2 parts by weight, about 0.7 parts by weight to about 5 parts by weight, about 0.7 parts by weight to about 4 parts by weight, about 0.7 parts by weight to about 3 parts by weight, or about 0.7 parts by weight to about 2 parts by weight. The process time may be about 1 minute to about 60 minutes, about 10 minutes to about 30 minutes, or about 5 minutes to about 20 minutes.

Next, the surface-treated calcium carbonate may be subjected to additional processes such as grinding and classifying aggregates generated in the surface treatment process. In the surface-treated calcium carbonate, based on a total weight, the content of the organic acid may be about 0.1 wt% to about 3 wt%, about 0.1 wt% to about 2 wt%, about 0.1 wt% to about 1 wt%, about 0.2 wt% to about 3 wt%, about 0.2 wt% to about 2 wt%, about 0.2 wt% to about 1 wt%, about 0.3 wt% to about 3 wt%, about 0.3 wt% to about 2 wt%, or about 0.3 wt% to about 1 wt%.

The surface-treated calcium carbonate may be partially oxidized by the organic acid. The surface-treated calcium carbonate may partially contain oxidized calcium (CaO). Based on 100 volume% of the surface-treated calcium carbonate particles, the ratio of the oxidized calcium may be 5 volume% or less, 4 volume% or less, 3 volume% or less, 2 volume% or less, 1 volume% or less, 0.01 volume% or more and 5 volume% or less, 0.01 volume% or more and 4 volume% or less, 0.01 volume% or more and 3 volume% or less, 0.01 volume% or more and 2 volume% or less, or 0.01 volume% or more and 1 volume% or less. The ratio of the oxidized calcium may be measured by ethylenediaminetetraacetic acid (EDTA) titration according to JIS R 9011. When the range is satisfied, the uniformity of the surface of the calcium carbonate may be improved, and the elution of organic acids from the surface of the calcium carbonate may be minimized, thereby improving hydrolysis resistance.

The biodegradable resin composition may include one or more selected from the group consisting of iron, magnesium, manganese and calcium.

The biodegradable resin composition may further include one or more selected from the group consisting of aluminum, cobalt, potassium, sodium, and phosphorus. Since the biodegradable resin composition includes minerals such as iron, magnesium, calcium, and manganese that can improve the soil environment, it may induce soil fertility. In addition, when the biodegradable molded article manufactured from the biodegradable resin composition is used as a soil fertilization material, a step of spreading fertilizer on the soil may be omitted, which may reduce the labor of crop cultivation and increase a final crop production amount. In addition, when the biodegradable molded article is used as a soil-packaging material, acid components generated during biodegradation may be neutralized by the minerals, preventing soil acidification, and the biodegradability may be further improved by the minerals.

The minerals included in the biodegradable resin composition may be derived from the inorganic filler or a metal salt. The metal salt may include one or more elements selected from the group consisting of iron, magnesium, manganese and calcium, and may include one or more elements selected from the group consisting of aluminum, cobalt, potassium, sodium, and phosphorus. The metal salt may include a stearic acid salt, and, for example, iron stearate, calcium stearate, manganese stearate, magnesium stearate, etc.

The content of the content of the minerals included in the biodegradable resin composition may be measured by inductively coupled plasma optical emission spectrometry (ICP-OES). Based on the total weight of the biodegradable resin composition, the content of the iron may be 1 ppm to 200 ppm, 1 ppm to 197 ppm, 1 ppm to 195 ppm, 1 ppm to 190 ppm, 1 ppm to 185 ppm, 1 ppm to 182 ppm, 10 ppm to 200 ppm, 10 ppm to 190 ppm, 10 ppm to 182 ppm, 20 ppm to 200 ppm, 20 ppm to 190 ppm, 20 ppm to 182 ppm, 30 ppm to 200 ppm, 30 ppm to 190 ppm, 30 ppm to 182 ppm, or 35 ppm to 182 ppm. When the range is satisfied, The soil environment and the biodegradability of the biodegradable resin composition may be improved without causing discoloration such as yellowing.

The type of iron is not particularly limited, but it may be iron with an oxidation number of +2 or +3 to improve the growth and development of crops and the soil environment.

Based on the total weight of the biodegradable resin composition, the content of the magnesium may be 100 ppm or more, 200 ppm or more, 300 ppm or more, 400 ppm or more, 500 ppm or more, 100 ppm or more to 2,000 ppm or less, 200 ppm or more to 2,000 ppm or less, 300 ppm or more to 2,000 ppm or less, 400 ppm or more to 2,000 ppm or less, 500 ppm or more to 2,000 ppm or less, 100 ppm or more to 1,500 ppm or less, 200 ppm or more to 1,500 ppm or less, 300 ppm or more to 1,500 ppm or less, 400 ppm or more to 1,500 ppm or less, or 500 ppm or more to 1,500 ppm or less. When the range is satisfied, the soil environment may be improved, and the activity of enzymes involved in the phosphorus metabolism or carbohydrate metabolism of cultivated crops may be enhanced, thereby promoting the growth of the cultivated crops.

Based on the total weight of the biodegradable resin composition, the content of the manganese may be 3 ppm or more, 4 ppm or more, 5 ppm or more, 6 ppm or more, 3 ppm or more to 50 ppm or less, 3 ppm or more to 40 ppm or less, 3 ppm or more to 30 ppm or less, 3 ppm or more to 20 ppm or less, 3 ppm or more to 15 ppm or less, or 6 ppm or more to 13 ppm or less. When the range is satisfied, the soil environment may be improved, the chlorophyll synthesis of crops may be enhanced, chlorosis may be prevented, and the growth of crops may be developed.

Based on the total weight of the biodegradable resin composition, the content of the calcium may be $1\times10^5$ ppm or more, $1.03\times10^5$ ppm or more, $1.06\times10^5$ ppm or more, $1.1\times10^5$ ppm or more, $1\times10^5$ ppm or more to $1\times10^6$ ppm or less, $1\times10^5$ ppm or more to $5\times10^5$ ppm or less, $1\times10^5$ ppm or more to $4x10^5$ ppm or less, $1\times10^5$ ppm or more to $3\times10^5$ ppm or less, or $1.1\times10^5$ ppm or more to $2.9\times10^5$ ppm or less.

When the range is satisfied, soil acidification may be reduced, thereby inducing soil fertility, and the dissolution of cell walls of cultivated crops may be prevented, thereby promoting the growth of the cultivated crops.

The biodegradable resin composition may have a value of 5 to 300, as calculated by Equation 1 below:

[Equation 1]

$$X/Y \times 0.1$$

(In Equation 1, X denotes the content of the calcium, and Y denotes the content of the magnesium.)

A value calculated by Equation 1 may be 5 to 100, 5 to 90, 5 to 80, 5 to 70, 5 to 60, 5 to 50, or 6 to 50.

The value calculated by Equation 1 means a relative ratio of the content of the calcium to the content of the magnesium, and the content of the calcium to the content of the magnesium is relatively high as the value calculated by Equation 1 increases.

Among nutrients required by crops, calcium and magnesium have an antagonistic effect that inhibits each other's absorption. As the content of the calcium increases, the effect of the magnesium absorption in the crops may decrease. When the biodegradable molded article manufactured from the biodegradable resin composition is used as a product related to cultivated crops within a range of a value calculated by Equation 1, the growth of cultivated crops may be promoted without being significantly affected by calcium and magnesium absorption.

A value of the biodegradable resin composition, as calculated by Equation 2 below, may be 5 to 3,000:

[Equation 2]

$$X/Z \times 0.01$$

(In Equation 2, X denotes the content of the calcium, and Z denotes the content of the iron.)

A value calculated by Equation 2 may be 5 to 1,000, 5 to 500, 5 to 100, 5 to 90, 5 to 85, or 6 to 85.

The value calculated by Equation 2 means a relative ratio of the content of the calcium to the content of the iron, and the content of the calcium to the content of the iron is relatively high as the value calculated by Equation 2 increases.

Among nutrients required by crops, calcium and iron have an antagonistic effect that inhibits each other's absorption. As the content of the calcium increases, the effect of the iron absorption in the crops may decrease. When the biodegradable molded article manufactured from the biodegradable resin composition is used as a product related to cultivated crops within a range of a value calculated by Equation 1, the growth of cultivated crops may be promoted without being significantly affected by calcium and iron absorption. Based on the total weight of the biodegradable resin composition, the content of the aluminum may be 30 ppm or more, 40 ppm or more, or 50 ppm or more, the content of the potassium may be 5 ppm or more, 8 ppm or more, or 10 ppm or more, the content of the manganese may be 1 ppm or more, 3 ppm or more, or 5 ppm or more, the content of the sodium may be 10 ppm or more, 15 ppm or more, or 20 ppm or more, and the content of the phosphorus may be 20 ppm or more, 30 ppm or more, or 50 ppm or more.

Based on the total weight of the biodegradable resin composition, the content of cadmium in the biodegradable resin composition may be less than 1 ppm. When the range is satisfied, the soil environment may be improved while meeting the heavy metal content limits set by the Fertilizer Management Act.

In addition, examples of the heavy metals include cadmium, cobalt, copper and nickel. Preferably, the content of each of the cadmium, the cobalt, the copper and the nickel in the biodegradable resin composition may be less than 1 ppm based on the total weight of the biodegradable resin composition.

The biodegradable resin composition may include a metal salt. The metal salt may include one or more selected from the group consisting of iron (Fe), magnesium (Mg), nickel (Ni) cobalt (Co), copper (Cu), palladium (Pd), zinc (Zn), vanadium (V), titanium (Ti), indium (In), manganese (Mn), silicon (Si) and tin (Sn). In addition, the metal salt may be selected from the group consisting of acetate, nitrate, nitride, sulfide, sulfate, sulfoxide, hydroxide, hydrate, chloride, chlorinate and bromide.

The content of the metal salt may be about 0.1 ppm to about 1,000 ppm, about 1 ppm to about 500 ppm, about 1 ppm to about 100 ppm, or about 1 ppm to about 50 ppm based on the total weight of the biodegradable resin composition.

The biodegradable resin composition may include an anti-hydrolysis agent.

The anti-hydrolysis agent may be chemically bonded to the polymers contained in the biodegradable resin. The anti-hydrolysis agent may couple the polymers contained in the biodegradable resin to each other.

The anti-hydrolysis agent may include silicon. The anti-hydrolysis agent may be at least one selected from silicon-based compounds such as silane, silazane and siloxane. The anti-hydrolysis agent may include alkoxy silane. The anti-hydrolysis agent may include trimethoxy silane and/or triethoxy silane. The anti-hydrolysis agent may include alkoxy silane including an epoxy group. The anti-hydrolysis agent may include at least one selected from the group consisting of 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane and 3-glycidoxypropyl triethoxysilane.

The content of the silicon may be about 0.1 ppm to about 1,000 ppm, about 1 ppm to about 500 ppm, about 1 ppm to about 400 ppm, or about 1 ppm to about 300 ppm based on the total weight of the biodegradable resin composition. Since the biodegradable resin composition includes the anti-hydrolysis agent in the range, it may have improved biodegradability while having appropriate initial hydrolysis characteristics.

A ratio of the iron to the silicon (the content (ppm) of the iron/ the content (ppm) of the silicon) may be about 0.1 to 0.8, 0.1 to 0.7, 0.3 to 0.7, or 0.35 to 0.65. As the biodegradable resin composition includes silicon and iron in the ranges, it may have an appropriate hydrolysis degree and an appropriate biodegradability degree. In particular, the hydrolysis degree may be appropriately controlled according to the content of the silicon, and the biodegradability degree may be appropriately controlled according to the content of the iron.

The biodegradable resin composition may include a reinforcing agent. The reinforcing agent may be a fiber derived from biomass. The reinforcing agent may include nanocellulose. The nanocellulose may be natural nanocellulose in the form of a gel or dry powder. The dispersion stability, strength, and processability of a biodegradable resin composition containing the nanocellulose may be improved.

The nanocellulose may have a diameter of 1 nm to 100 nm, 1 nm to 95 nm, 5 nm to 90 nm, 10 nm to 80 nm, 5 nm to 60 nm, or 15 nm to 60 nm. The nanocellulose may have a length of 5 nm to 5 μm, 5 nm to 1 μm, 10 nm to 700 nm, 20 nm to 500 nm, 60 nm to 300 nm, 80 nm to 200 nm, or 100 nm to 250 nm. When the diameter and length meet the above ranges, the strength and tear strength of the biodegradable resin composition may be further improved.

The nanocellulose may be in the form of dry powder or gel having aggregated secondary particles rather than single particles, and the size of the secondary particles may be 1 μm to 50 μm, 2 μm to 45 μm, or 5 μm to 50 μm. The nanocellulose may be in the form of freeze-dried powder to reduce the volume thereof for easy storage and transportation.

The nanocellulose may have an average particle diameter of 200 nm or less, 190 nm or less, or 185 nm or less. The particle diameter deviation may be 20 % or less, 18 % or less, or 16 % or less. When the range is satisfied, the dispersibility and durability of the nanocellulose may be improved.

The nanocellulose may function as a crystal nucleating agent that improves the crystallization rate of the biodegradable resin composition and increases the crystallization temperature of the biodegradable resin composition. The nanocellulose may include one or more selected from the group consisting of cellulose nanocrystals, cellulose nanofibers, and micro fibrillated cellulose. In terms of strength and thermal properties, the cellulose nanocrystals or the cellulose nanofibers are more preferable.

The nanocellulose may perform UV-resistant function and may impart adequate UV-resistant properties, biodegradation rate, and hydrolysis rate to the biodegradable resin. The nanocellulose may include one or more selected from the group consisting of hydroxymethyl cellulose, hydroxyethyl cellulose, hydroxypropyl cellulose, hydroxypropyl methyl cellulose, cellulose acetate, methyl cellulose, ethyl cellulose, propyl cellulose, butyl cellulose, pentyl cellulose, hexyl cellulose, and cyclohexyl cellulose.

The nanocellulose may be pretreated by a bead mill or by ultrasonic waves. The nanocellulose may be water-dispersed nanocellulose pretreated with a bead mill or pretreated with ultrasonic waves.

The nanocellulose may be obtained by dispersing cellulose nanocrystals in the form of dry powder or gel with a particle diameter of 1 μm to 50 μm in water and then pre-treating the cellulose nanocrystals with a bead mill or ultrasonic waves. In this case, the number of nanocellulose particles may increase, thereby improving dispersibility.

Based on a total weight of the nanocellulose, the nanocellulose may be pre-treated with 0.01 to 10 wt%, 0.05 to 8 wt%, 0.1 to 8 wt%, 0.5 to 6 wt%, or 0.7 to 6 wt% of a silane coupling agent. When the range is satisfied, interfacial adhesion, dispersibility, and compatibility may be maximized. Thus, the mechanical properties, durability, and hydrolysis resistance of a biodegradable resin composition including the nanocellulose may be further improved.

The biodegradable resin composition may include an oligomer. The oligomer may have a weight average molecular weight of about 400 g/mol to about 1,300 g/mol. Based on the weight of the biodegradable resin, the oligomer may be included in an amount of about 3,000 ppm to about 30,000 ppm, about 5,000 ppm to about 20,000 ppm, or about 5,000 ppm to about 15,000 ppm in the biodegradable resin composition. The oligomer may be a reaction product of at least two of the diol, the aromatic dicarboxylic acid, and the aliphatic dicarboxylic acid. The oligomer may be a reaction product of 1,4-butanediol, terephthalic acid, and adipic acid.

The biodegradable resin composition may include a plasticizer. The plasticizer may impart processability or flexibility to a molded article manufactured using the biodegradable resin composition. The plasticizer may be glycerol, an acrylate, glycerin, glycerol monostearate (GMS), sorbitol, or a mixture thereof. Based on the total weight of the biodegradable resin composition, the plasticizer may be included in an amount of 0.1 wt% to 15 wt%, 0.1 wt% to 10

wt%, or 0.1 wt% to 5 wt%. When the range is satisfied, the elongation and tearing properties of a molded article manufactured using the biodegradable resin composition may be improved.

The biodegradable resin composition may include an antioxidant. The antioxidant may include one or more selected from the group consisting of a phosphorus-based antioxidant, a phenol-based antioxidant, and a pentaerythritol-based antioxidant.

The phosphorus-based antioxidant may include one or more selected from the group consisting of triesters of phosphorous acids such as triphenyl phosphite, trisnonylphenyl phosphite, and tris(2,4-di-t-butylphenyl)phosphite, diesters, monoesters, trimethyl phosphate, triethyl phosphate, tributyl phosphate, trioctyl phosphate, triphenyl phosphate, tricresyl phosphate, tris(nonylphenyl)phosphate, and 2-ethylphenyl diphenyl phosphate.

The phenol-based antioxidant may include one or more selected from the group consisting of $\alpha$-tocopherol, butylhydroxytoluene, sinapyl alcohol, vitamin E, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, 2, 6-di-t-butyl-4-(N,N-dimethylaminomethyl)phenol, 3,5-di-t-butyl-4-hydroxybenzyl phosphonate diethyl ester, 2,2-bis(((3-(3,5-di-tert-butyl-4-hydroxyphenyl)propanoyl)oxy)methyl)propane-1,3-diyl bis(3-(3,5-di-tert)-butyl-4-hydroxyphenyl)propanoate), pentaerythritol tetrakis(3,5-di-tert-butyl-4-hydroxyhydrocinnamate), pentaerythritol tetrakis[3-(3,5-di-tert-butyl-4-hydroxyphenyl)propionate], and tetrakis[3-(3,5-di-t-butyl-4-hydroxyphenyl)propionyloxymethyl]methane.

The antioxidant may further include one or more selected from the group consisting of BHT, ascorbic acid, catechin, quercetin, dodecyl gallate, TBHQ, Ralox, Irganox 1135, Irganox 1076, nordihydroguaiaretic acid, epicatechin gallate, epigallocatechin gallate, epigallocatechin, propyl gallate, 2,3,5-trihydroxybutyrophenone, butylated hydroxyanisole, 4-hydroxymethyl-2,6-di-tert-butylphenol, $\alpha$-tocopherol, resveratrol, rutin, astaxanthin, lycopene, beta-carotene, and melatonin.

Based on the total weight of the biodegradable resin composition, the antioxidant may be included in an amount of 5 wt% or less, 3 wt% or less, 2 wt% or less, 1.5 wt% or less, 1 wt% or less, 0.5 wt% or less, 0.3 wt% or less, 0 to 5 wt%, 0.01 to 4 wt%, 0.1 to 3 wt%, 1 to 3 wt%, 1 to 2 wt%, 0.01 to 0.3 wt%, 0.05 to 0.3 wt%, 0.15 to 0.3 wt%, or 0.2 to 0.3 wt%.

The antioxidant may include both the phosphorus-based antioxidant and the phenol-based antioxidant. When the antioxidant includes both the phosphorus-based antioxidant and the phenol-based antioxidant, the weight ratio of the phosphorus-based antioxidant to the phenol-based antioxidant may be 1:10 to 10:1, 1:5 to 5:1, 1:1 to 5:1, 2:1 to 4:1, 2.5:1 to 3.5:1, 1:5 to 1:1, 1:2 to 1:4, or 1:2.5 to 1:3.5. When the range is satisfied, oxidation of the biodegradable resin composition may be delayed in various temperature ranges.

The biodegradable resin composition may include a heat stabilizer.

The heat stabilizer may be a phosphorus heat stabilizer. The heat stabilizer may include one or more selected from the group consisting of amine-based high-temperature heat stabilizers (e.g., tetraethylenepentamine), triethyl phosphonoacetate, phosphoric acid, phosphorous acid, polyphosphoric acid, trimethyl phosphate, triethyl phosphate, trimethyl phosphine, and triphenyl phosphine. The heat stabilizer may be an antioxidant that has an antioxidant function. Based on a total weight of the biodegradable resin, the heat stabilizer may be included in an amount of 3,000 ppm or less, 10 ppm to 3,000 ppm, 20 ppm to 2,000 ppm, 20 ppm to 1,500 ppm, or 20 ppm to 1,000 ppm.

The biodegradable resin composition may include a lubricant.

The lubricant may include one or more selected from the group consisting of fatty acid-based lubricants such as stearic acid; aliphatic alcohol-based lubricants; aliphatic amide-based lubricants such as stearamide; aliphatic ester-based lubricants such as stearic acid-n-butyl, hydroxystearic acid methyl, polyhydric alcohol fatty acid esters, saturated fatty acid esters, and ester wax; and fatty acid metal soap-based lubricants. Specifically, the lubricant may be a stearate-based lubricant, and may include one or more selected from the group consisting of calcium stearate, zinc stearate, barium stearate, magnesium stearate, glycerin stearate, and butyl stearate. The stearate-based lubricant may reduce heat generation due to friction during mixing, melting, and processing of raw materials, and has excellent dispersing and lubricating effects for a biodegradable polyester resin compared to price thereof, thereby improving manufacturing efficiency.

Based on the total weight of the biodegradable resin composition, the lubricant may be included in an amount of 5 wt% or less, 1 wt% or less, less than 1 wt%, 0.9 wt% or less, 0.8 wt% or less, 0.7 wt% or less, 0.5 wt% or less, 0.3 wt% or less, or 0.1 wt% or less. When the range is satisfied, manufacturing efficiency may be improved without deteriorating the physical properties of the biodegradable resin composition.

The biodegradable resin composition may include a flame retardant. The flame retardant may include one or more selected from the group consisting of a halogen-based flame retardant, a phosphorus-based flame retardant, and a non-phosphorus halogen-based flame retardant such as metal hydrates.

The halogen-based flame retardant may include one or more selected from the group consisting of halogenated bisphenolic compounds such as halogenated bisphenyl alkanes, halogenated bisphenyl ethers, halogenated bisphenyl thioethers, and halogenated bisphenyl sulfones; and bisphenol-bis(alkyl ether) compounds such as brominated bisphenol A, brominated bisphenol S, chlorinated bisphenol A, and chlorinated bisphenol S.

The phosphorus-based flame retardant may include one or more selected from the group consisting of tris(diethyl

phosphinic acid)aluminum, bisphenol A bis(diphenyl phosphate), phosphoric acid triaryl isopropyl, cresyl di-2,6-xylenyl phosphate, and aromatic condensation phosphoric acid ester.

The metal hydrates may include aluminum trihydrate, magnesium dihydroxide, or combinations thereof.

Flame retardant aids for improving the flame retardant effect may include one or more selected from the group consisting of antimony oxides such as antimony trioxide and antimony pentoxide, zinc oxide, iron oxide, aluminum oxide, molybdenum oxide, titanium oxide, calcium oxide, and magnesium oxide.

The biodegradable resin composition may include a foaming agent. The foaming agent may be mixed with the molten biodegradable resin composition or injected by applying pressure. The foaming agent may be a phase change from solid to gas or from liquid to gas or gas itself, and is used to control the foaming ratio (foaming density) of a foam sheet.

The foaming agent may include one or more selected from the group consisting of aliphatic hydrocarbons, alicyclic hydrocarbons, halogenated hydrocarbons, inorganic gases and water.

The biodegradable resin composition may include a dispersant. The dispersant may improve the dispersibility of a solvent and solute. The dispersant may include one or more selected from the group consisting of aliphatic polyesters, polylactic acid, polyglycolic acid, polycaprolactone, and polyhydroxyalkanoate.

Based on the total weight of the biodegradable resin composition, the dispersant may be included in an amount of 1 to 20 wt%, 1 to 15 wt%, 1 to 13 wt%, 1 to 11 wt%, 2 to 10 wt%, 5 to 15 wt%, 7 to 12 wt%, 2 to 8 wt%, 5 to 8 wt%, or 2 to 5 wt%.

The biodegradable resin composition may include a chain extender. The chain extender may include one or more selected from the group consisting of aromatic diisocyanates, aliphatic diisocyanates, isocyanurates, bisoxazolines, carboxylic acid anhydrides, and epoxides.

The aromatic diisocyanates may include one or more selected from the group consisting of tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, and xylylene diisocyanate.

The aliphatic diisocyanates may include one or more selected from the group consisting of 1,6-hexamethylene diisocyanate, isophorone diisocyanate, and methylene bis(4-isocyanatocyclohexane).

The isocyanurates may include isophorone diisocyanate or methylene bis(4-isocyanatocyclohexane).

The bisoxazolines may include one or more selected from the group consisting of 2,2'-bis(2-oxazoline), bis(2-oxazolinyl)methane, 1,2-bis(2-oxazolinyl)ethane, 1,3-bis(2-oxazolinyl)propane, and 1,4-bis(2-oxazolinyl)butane.

The epoxide refers to an epoxy-containing copolymer based on at least one of styrene, acrylic acid ester, and/or methacrylic acid ester, and is preferably a copolymer having a glycidyl (meth)acrylate content of greater than 20, 30, or 50 wt%.

Based on the total weight of the biodegradable resin composition, the chain extender may be included in an amount of 1.5 wt% or less, 1 wt% or less, 0.5 wt% or less, 0.3 wt% or less, 0 to 1.5 wt%, 0.01 to 1 wt%, 0.1 to 1 wt%, 0.01 to 0.5 wt%, 0.01 to 0.3wt%, or 0.1 to 0.5 wt%.

The acid value of the biodegradable resin composition may be about 0.01 mg KOH/g to 3.0 mg KOH/g, about 0.01 mg KOH/g to 2.8 mg KOH/g, or about 0.01 mg KOH/g to 2.5 mg KOH/g. Since the biodegradable resin composition has an acid value in the range, it may have the hydrolysis characteristics and biodegradability characteristics described above.

The hydrolysis degree of the biodegradable resin composition may be measured.

The hydrolysis degree may be measured by Measurement Method 1 below:

[Measurement Method 1]

The hydrolysis degree after 1 week is a reduction rate compared to the initial number average molecular weight of the biodegradable resin composition when the biodegradable resin composition is placed for 1 week under high-temperature and high-humidity conditions of 80 °C and 100% humidity, and

the hydrolysis degree after 3 weeks is a reduction rate compared to the initial number average molecular weight of the biodegradable resin composition when the biodegradable resin composition is placed for 3 weeks under high-temperature and high-humidity conditions of 80 °C and 100% humidity.

The number average molecular weight may be measured using gel permeation chromatography (GPC).

The hydrolysis degree may be represented by Equation 3 below:

[Equation 3]

$$\text{Hydrolysis degree (\%)} = \frac{\text{Initial number average molecular weight - Number average molecular weight after hydrolysis}}{\text{Initial number average molecular weight}} \text{ X } 100$$

In addition, when the hydrolysis degree is measured, the biodegradable resin composition may be manufactured into a sheet having a thickness of about 300 $\mu$m. Next, the manufactured sheet may be cut to a size of about 3 cm $\times$ 3 cm to

produce flakes. The flakes may be immersed in the hot water to conduct the accelerated hydrolysis test.

In the biodegradable resin composition, a hydrolysis degree after 1 week may be about 30 % to about 70 %, about 35 % to about 70 %, about 35 % to about 60 %, or about 40 % to about 65 %.

In the biodegradable resin composition, a hydrolysis degree after 2 weeks may be about 50 % to about 93 %, about 70 % to about 93 %, about 80 % to about 93 %, or about 85 % to about 92 %.

In the biodegradable resin composition, a hydrolysis degree after 3 weeks may be about 85 % or more, about 85 % to about 97 %, about 88 % to about 97 %, about 90 % to about 97 %, or about 91 % to about 96 %.

In the biodegradable resin composition, a hydrolysis degree after 4 weeks may be about 87 % or more, about 90 % to about 99 %, about 91 % to about 99 %, about 92 % to about 99 %, or about 93 % to about 97 %.

In the biodegradable resin composition, a hydrolysis degree after 6 weeks may be about 90 % or more, about 92 % or more, about 94 % or more, or about 95 % or more.

In the biodegradable resin composition, a hydrolysis degree after 9 weeks may be about 92 % or more, about 93 % or more, about 95 % or more, or about 96 % or more.

A biodegradable film containing the biodegradable resin composition may have a biodegradability degree obtained by measuring the generation amount of carbon dioxide according to KS M3100-1.

The biodegradability degree may be about 80 % or more, about 85 %, or about 90 % or more. The biodegradability degree may be derived by Equation 4 below:

[Equation 4]

$$\text{Biodegradability degree (\%)} = \frac{CO_2 \text{ generation amount in test vessel - } CO_2 \text{ generation amount in inoculation vessel}}{\text{Theoretical } CO_2 \text{ generation amount of biodegradable resin}} \text{ X } 100$$

The biodegradability degree may be measured based on the generation amount of carbon dioxide according to KS M3100-1. Specifically, an inoculum container containing only compost manufactured in a compost factory is prepared, and a test container, into which flakes of the biodegradable resin composition of 5% by weight of the dry weight of the compost are fed, is prepared. Next, the compost and the flakes are incubated for 180 days under conditions of 58±2°C, a moisture content of 50% and an oxygen concentration of 6% or more, carbon dioxide generated in each container is collected, and the amount of carbon dioxide generated in each container is measured by titration of an aqueous phenolphthalein solution. As in Equation 2, the biodegradability degree may be derived from a ratio of carbon dioxide generated in the biodegradable resin composition relative to a theoretical carbon dioxide generation amount. polyester

The flakes may be manufactured by cutting the biodegradable film to a size of about 3 cm×3 cm, and the flakes may be mixed with the compost to conduct the biodegradation test.

The biodegradable resin composition may have a wet hardness reduction rate. The wet hardness reduction rate may be obtained by dividing a difference between an initial hardness before immersion and a wet hardness after immersing the biodegradable resin composition in water at a certain temperature by the initial hardness.

The wet hardness reduction rate may be derived by Equation 5 below:

[Equation 5]

$$\text{Wet hardness reduction rate (\%)} = \frac{\text{Initial hardness - Wet hardness after immersion}}{\text{Initial hardness}} \text{ X } 100$$

In the biodegradable resin composition, a wet hardness reduction rate after immersing at about 30°C for about 24 hours may be about 16 % or less, about 15 % or less, about 14 % or less, about 13 % or less, or about 12 % or less. A minimum value of the wet hardness reduction rate after immersing at about 30°C for about 24 hours may be about 1 %, about 3 %, about 5 %, or about 6 %.

The wet hardness reduction rate after immersing at 30°C for about 24 hours may be measured by the following measurement method. First, the biodegradable resin composition is processed to produce a polyester block having a thickness of about 2.5 mm. An initial hardness of the polyester block is measured before immersion, and a wet hardness of the polyester block is measured immediately after immersing in water at about 30°C for about 24 hours. Next, the wet hardness reduction rate after immersing at 30°C for about 24 hours may be derived by Equation 3.

The biodegradable resin composition is dried at about 80°C for about 20 minutes to have a moisture content of 500 ppm, placed in a stainless steel mold, and pressed at about 210°C under a pressure of about 10 MPa for about 5 minutes, thereby producing a polyester block having a thickness of about 2.5 mm.

The initial hardness may be a Shore D hardness of about 30 to about 45, about 33 to about 43, or about 35 to about 41.

The wet hardness after immersing at 30°C for 24 hours may be a Shore D hardness of about 28 to about 43, about 29 to 41, or about 30 to 38.

A wet hardness reduction rate after immersing at 30°C for 0.5 hours may be about 16 % or less, about 15 % or less, about 14 % or less, about 13 % or less, or about 12% or less. A minimum value of the wet hardness reduction rate after immersing at 30°C for 0.5 hours may be about 1 %, about 3 %, about 5 %, or about 6 %.

The wet hardness after immersing at 30°C for 0.5 hours may be a Shore D hardness of about 28 to about 43, about 29 to about 41, or about 30 to about 39.

A deviation between the wet hardness reduction rate after immersing at 30°C for 24 hours and the wet hardness reduction rate after immersing at 30°C for 0.5 hours may be about 10% or less, 7% or less or 5% or less. The deviation between the wet hardness reduction rate after immersing at 30°C for about 24 hours and the wet hardness reduction rate after immersing at 30°C for 0.5 hours is obtained by dividing an absolute value of a difference between a wet hardness after immersing at 30°C for 24 hours and a wet hardness after immersing at 30°C for 0.5 hours by the initial hardness.

A wet hardness reduction rate after immersing at 30 °C for 1 hour may be about 16 % or less, about 15 % or less, about 14 % or less, about 13 % or less, or about 12 % or less. A minimum value of the wet hardness reduction rate after immersing at 30 °C for 1 hour may be about 1 %, about 3 %, about 5 %, or about 6 %.

A wet hardness after immersing at 30 °C for 1 hour may be a Shore D hardness of about 28 to about 43, 29 to about 41, or 30 to about 39.

A deviation between the wet hardness reduction rate after immersing at 30 °C for 1 hour and the wet hardness reduction rate after immersing at about 30°C for about 24 hours may be about 10 % or less, about 7 % or less, or about 5 % or less.

A wet hardness reduction rate after immersing at 30 °C for 18 hours may be about 16 % or less, about 15 % or less, about 14 % or less, about 13 % or less, or about 12 % or less. A minimum value of the wet hardness reduction rate after immersing at 30 °C for 1 hour may be about 1 %, about 3 %, about 5 %, or about 6 %. A minimum value of the wet hardness reduction rate after immersing at 30 °C for 18 hours may be about 1 %, about 3 %, about 5 %, or about 6 %.

A wet hardness after immersing at 30 °C for 18 hours may be a Shore D hardness of about 28 to about 43, 29 to about 41, or 30 to about 39.

A deviation between the wet hardness reduction rate after immersing at 30 °C for 18 hours and the wet hardness reduction rate after immersing at about 30°C for about 24 hours may be about 10 % or less, about 7 % or less, or about 5 % or less.

A wet hardness reduction rate after immersing at 50 °C for 24 hours may be about 16 % or less, about 15 % or less, about 14 % or less, about 13 % or less, or about 12 % or less. A minimum value of the wet hardness reduction rate after immersing at 30 °C for 1 hour may be about 1 %, about 3 %, about 5 %, or about 6 %. A minimum value of the wet hardness reduction rate after immersing at 50 °C for 24 hours may be about 1 %, about 3 %, about 5 %, or about 6 %.

A wet hardness after immersing at 50 °C for 24 hours may be a Shore D hardness of about 28 to about 43, 29 to about 41, or 30 to about 39.

A deviation between the wet hardness reduction rate after immersing at about 30°C for about 24 hours and the wet hardness reduction rate after immersing at 50 °C for 24 hours may be about 10 % or less, about 7 % or less, or about 5 % or less.

A wet hardness reduction rate after immersing at 70 °C for 24 hours may be about 16 % or less, about 15 % or less, about 14 % or less, about 13 % or less, or about 12 % or less. A minimum value of the wet hardness reduction rate after immersing at 30 °C for 1 hour may be about 1 %, about 3 %, about 5 %, or about 6 %. A minimum value of the wet hardness reduction rate after immersing at 70 °C for 24 hours may be about 1 %, about 3 %, about 5 %, or about 6 %.

A wet hardness after immersing at 70 °C for 24 hours may be a Shore D hardness of about 28 to about 43, 29 to about 41, or 30 to about 39.

A deviation between the wet hardness reduction rate after immersing at about 30°C for about 24 hours and the wet hardness reduction rate after immersing at 70 °C for 24 hours may be about 10 % or less, about 7 % or less, or about 5 % or less.

A biodegradable molded article according to the present invention may be manufactured using the biodegradable resin composition. The biodegradable molded article may be manufactured by a method known in the art, e.g., by extruding or injecting the biodegradable resin composition. The molded article may be an injection molded article, an extrusion molded article, a thin film molded article, or a blow molded article, but the present invention is not limited thereto. The biodegradable molded article may be a soil fertilization material, and specifically an agricultural mulching film, disposable gloves, a food-packaging material, fabric, knitted fabric, non-woven fabric, a rope, or a food-packaging container. Since the biodegradable molded article may be manufactured from a biodegradable resin composition that can induce soil fertilization and neutralize acid components, so that excellent properties may be exhibited when applied to packaging materials and mulching films used for crop cultivation, etc.

The biodegradable molded article may be formed from the biodegradable resin which can improve properties such as impact absorption energy and hardness, as well as impact resistance and durability in particular, so it can exhibit excellent properties when applied to packaging materials for products stored and transported at low temperatures, automotive interior materials requiring durability, garbage bags, mulching films, and disposable products.

The biodegradable molded article includes a biodegradable resin, an inorganic filler, and one or more selected from the group consisting of iron, magnesium, manganese and calcium, and the content of the inorganic filler may be 30 wt% or more based on the total weight of the biodegradable resin composition.

The biodegradable molded article includes the biodegradable resin composition including a biodegradable resin, an inorganic filler, a metal salt, and an anti-hydrolysis agent, and the content of the inorganic filler may be 30 wt% or more based on the total weight of the biodegradable resin composition.

The biodegradable resin, the inorganic filler, the iron, the magnesium, the manganese, the calcium, the metal salt, and the anti-hydrolysis agent may be the same as the biodegradable resin, inorganic filler, iron, magnesium, manganese, calcium, metal salt, and anti-hydrolysis agent in the biodegradable resin composition described above.

The biodegradable molded article may be a biodegradable film.

The biodegradable film may have a thickness of 5 μm to 200 μm, 5 μm to 180 μm, 5 μm to 160 μm, 10 μm to 150 μm, 15 μm to 130 μm, 20 μm to 100 μm, 25 μm to 80 μm, 10 μm to 50 μm, 10 μm to 30 μm, or 25 μm to 60 μm.

The biodegradable film may have a tensile strength of 5 MPa or more, 7 MPa or more, 9 MPa or more, 10 MPa or more, 11 MPa or more, 30 MPa or less, 27 MPa or less, 25 MPa or less, 23 MPa or less, or 21 MPa or less. When the range is satisfied, mechanical properties may be excellent.

The biodegradable film may have a tear strength of 75 N/mm or more, 80 N/mm or more, 85 N/mm or more, 90 N/mm or more, 200 N/mm or less, 180 N/mm or less, 150 N/mm or less, or 135 N/mm or less. When the range is satisfied, the film does not tear easily, and the rate of biodegradation may be further improved after biodegradation begins.

The biodegradable film may have an elongation of 85 % or more, 90 % or more, 95 % or more, 700 % or less, 650 % or less, 600 % or less, or 550 % or less. When the range is satisfied, by ensuring elasticity, the film may withstand a certain load.

The biodegradable molded article may be a biodegradable sheet.

The biodegradable sheet may have a thickness of 5 μm to 180 μm, 5 μm to 160 μm, 10 μm to 150 μm, 15 μm to 130 μm, 20 μm to 100 μm, 25 μm to 80 μm, 10 μm to 50 μm, or 10 μm to 30 μm.

The biodegradable sheet may have a tensile strength of 5 MPa or more, 6 MPa or more, 9 MPa or more, 10 MPa or more, 11 MPa or more, 12 MPa or more, 40 MPa or less, 35 MPa or less, 30 MPa or less, 27 MPa or less, 25 MPa or less 23 MPa or less, or 21 MPa or less. When the range is satisfied, the sheet does not tear easily, and the rate of biodegradation may be further improved after biodegradation begins.

The biodegradable sheet may have an elongation of 10 % or more, 15 % or more, 20 % or more, 50 % or less, 70 % or more, 700 % or less, 650 % or less, 550 % or less, 500 % or less, or 450 % or less. When the range is satisfied, by ensuring elasticity, the sheet may withstand a certain load.

A method of manufacturing a biodegradable molded article according to the present invention may include step (a) of preparing a prepolymer by esterifying a diol ingredient and a dicarboxylic acid ingredient, step (b) of preparing a biodegradable resin by polycondensing the prepolymer, step (c) of preparing a biodegradable resin composition by mixing the biodegradable resin and an inorganic filler, step (d) of preparing pellets of the biodegradable resin composition, and step (e) of drying and melt-extruding the pellets.

The manufacturing method may include step (a) of preparing a prepolymer by esterifying a diol ingredient and a dicarboxylic acid ingredient.

The diol ingredient and the dicarboxylic acid ingredient may be the same as those of the above-described biodegradable resin composition. In step (a), the prepolymer may be prepared by performing a one-step esterification reaction of the diol ingredient, the dicarboxylic acid ingredient, and optionally, a composition containing the nanocellulose or by a two-step esterification reaction consisting of a first esterification reaction and a second esterification reaction.

The two-step esterification reaction may include step (a-1) of performing the first esterification reaction of the diol ingredient and the dicarboxylic acid ingredient and step (a-2) of performing the second esterification reaction by adding the diol ingredient and the dicarboxylic acid ingredient to the product of step (a-1).

When the biodegradable resin includes the nanocellulose, the binding strength of the nanocellulose may be improved by adding the nanocellulose in the second esterification reaction step. In addition, the binding force of the nanocellulose may be further improved by adding the water-dispersed nanocellulose in the second esterification reaction step.

The nanocellulose may be added at a temperature of 100 °C to 160 °C, 110 °C to 140 °C, or 110 °C to 150 °C. When the range is satisfied, hydrolysis resistance may be improved.

The nanocellulose may be added at a rate of 2 kg/min to 10 kg/min, 2.5 kg/min to 9.5 kg/min, or 3 kg/min to 8 kg/min. When the range is satisfied, without causing re-agglomeration of the nanocellulose, the efficiency of the manufacturing process may be improved.

In step (a), a titanium-based catalyst, a germanium-based catalyst, an antimony-based catalyst, an additive, and a stabilizer may be added before the esterification reaction. The esterification reaction may be performed at a temperature of 250 °C or less, 240 °C or less, 235 °C or less, 180 °C to 250 °C, 185 °C to 240 °C, or 200 °C to 240 °C for 0.5 hours to 5 hours, 0.5 hours to 4.5 hours, 0.5 hours to 3.5 hours, or 1 hours to 3 hours. The esterification reaction may be performed under normal pressure until the by-products water and methanol theoretically reach 90 %.

The prepolymer may have a number average molecular weight of 500 g/mol to 10,000 g/mol, 500 g/mol to 8,500 g/mol, 500 g/mol to 7,000 g/mol, 1,000 g/mol to 6,000 g/mol, or 2,500 g/mol to 5,500 g/mol. The number average molecular weight may be measured by gel permeation chromatography (GPC). When the range is satisfied, in the polycondensing reaction, the molecular weight of the prepolymer may be efficiently increased, thereby improving strength characteristics.

In step (a), a metal salt including one or more elements selected from the group consisting of iron, magnesium, manganese and calcium may be added before the esterification reaction, during the esterification reaction, or after the esterification reaction. In addition, the metal salt may include one or more elements selected from the group consisting of aluminum, cobalt, potassium, sodium, and phosphorus.

The manufacturing method may include step (b) of preparing a biodegradable resin by polycondensing the prepolymer.

The polycondensing reaction may be performed at a temperature of 180 °C to 280 °C, 190 °C to 270 °C, 210 °C to 260 °C, or 230 °C to 255 °C under a pressure of 1. Torr or less, 0.9 Torr or less, 0.7 Torr or less, 0.2 Torr to 1.0 Torr, 0.3 Torr to 0.9 Torr, or 0.5 Torr to 0.9 Torr for 1 hour to 6 hours, 1.5 hours to 5.5 hours, 2 hours to 5 hours, or 3.5 hours to 4.5 hours.

The biodegradable resin prepared in step (b) may have an intrinsic viscosity of 0.05 to 10 dL/gr. The biodegradable resin may have a melt viscosity of 1,000 to 30,000 poise as measured under the condition of 100 $s^{-1}$ using a Rheometrics dynamic spectrometer (RDS). The biodegradable resin may have a number average molecular weight (Mn) of 40,000 g/mol or more, 43,000 g/mol or more, 45,000 g/mol or more, or 40,000 g/mol to 70,000 g/mol. The biodegradable resin may have a weight average molecular weight (MW) of 60,000 g/mol or more, 65,000 g/mol or more, 75,000 g/mol or more, 80,000 g/mol or more, or 85,000 g/mol to 100,000 g/mol. The biodegradable resin may have a polydispersity index (PDI) of 1.2 to 2.0, 1.5 to 1.9, or 1.6 to 1.8. When the number average molecular weight, weight average molecular weight, or polydispersity index of the biodegradable resin satisfies the range, strength and processability may be further improved. The biodegradable resin may have an acid value of 1.8 mgKOH/g or less, 1.5 mgKOH/g or less, 1.3 mgKOH/g or less, or 1.25 mgKOH/g or less. When the range is satisfied, hydrolysis resistance may be improved.

The manufacturing method may include step (c) of preparing a biodegradable resin composition by mixing the biodegradable resin and an inorganic filler.

The mixing may be set appropriately according to a molding method. For example, before feeding the biodegradable resin and inorganic filler into a molding machine through a hopper, the biodegradable resin and inorganic filler may be melt-kneaded. Alternatively, melt-kneading and molding of the biodegradable resin and inorganic filler may be performed simultaneously. It is desirable to perform kneading with high shear stress to uniformly distribute the inorganic filler in the biodegradable resin. Specifically, the kneading is preferably performed using a kneader reactor, an extrusion molding machine equipped with a single screw, or a twin-screw kneader. When necessary, in step (c), one or more of the plasticizer and the additive may be additionally added.

Step (c) may include one or more mixing steps. One-stage mixing step may be a single mixing step of preparing a biodegradable resin composition including the inorganic filler in an amount of 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% based on the total weight of the biodegradable resin composition. A two-stage mixing step may include a first mixing step of preparing a biodegradable resin composition including the inorganic filler in an amount of 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% based on the total weight of the biodegradable resin composition and a second mixing step of preparing a biodegradable resin composition including the inorganic filler in an amount of 30 to 85 wt%, 30 to 80 wt%, 30 to 75 wt%, 30 to 70 wt%, 35 to 85 wt%, 35 to 80 wt%, 35 to 75 wt%, 35 to 70 wt%, 40 to 85 wt%, 40 to 80 wt%, 40 to 75 wt%, 40 to 70 wt%, 45 to 85 wt%, 45 to 80 wt%, 45 to 75 wt%, 45 to 70 wt%, 50 to 85 wt%, 50 to 80 wt%, 50 to 75 wt%, or 50 to 70 wt% based on the total weight of the biodegradable resin composition.

The one or more mixing steps may be a tandem continuous process. The mixing step may be performed at a temperature of 150 to 190 °C, 150 to 180 °C, or 160 to 180 °C. When the range is satisfied, an increase in torque during the mixing step may be reduced, and the thermal decomposition of the mixed biodegradable resin composition may be reduced.

The manufacturing method may include step (d) of preparing pellets of the biodegradable resin composition.

In step (d), the biodegradable resin composition is fed into an extrusion molding machine equipped with a single screw or an extrusion molding machine equipped with a twin screw, extruded at a temperature of 150 °C to 180 °C, cut with a hot-cut pellet cutter, and cooled at a temperature of 30 °C or less, 25 °C or less, 5 to 50 °C, 10 to 30 °C, 15 to 25 °C, or 20 to 25 °C to obtain pellets. In the cutting step, pellet cutting machines used in the art may be used without particular limitations, and the shape of the manufactured pellets is not particularly limited.

The manufacturing method may include step (e) of drying and melt-extruding the pellets.

The drying may be performed at 60 °C to 100 °C, 65 °C to 95 °C, 70 °C to 90 °C, or 75 °C to 85 °C for 2 hours to 12 hours, 3 hours to 12 hours, or 4 hours to 10 hours. When the conditions are satisfied, The appearance and mechanical and chemical properties of the biodegradable molded article may be further improved.

The melt-extruding may be performed at 270 °C or less, 265 °C or less, 260 °C or less, 255 °C or less, 130 °C to 270 °C, 130 °C to 250 °C, 140 °C to 230 °C, 150 °C to 200 °C, or 150 °C to 180 °C. The melt-extruding may be performed by a blown film process or a press process without particular limitation. During the melt-extruding, torque may be 100 N·m to 300 N·m or 150 N·m to 250 N·m.

Hereinafter, the present invention will be described in more detail based on examples and comparative examples. However, the examples and comparative examples are presented to explain the present invention in more detail, and the present invention is not limited by the examples and comparative examples.

<u>**First example**</u>

- Biodegradable resin: Kingpa Co., A400
- Calcium carbonate: Omia Co.
- Plasticizer: Glycerol
- Antioxidant #1: Phenol-based antioxidant, Adeca Korea Co., AO-60
- Antioxidant #2: Phosphorus-based antioxidant, Adeca Korea Co., 2112
- Metal salt: Iron stearate

**Example 1-1**

The biodegradable resin, calcium carbonate, a plasticizer, the antioxidant #1, and the antioxidant #2 were fed into a kneader reactor in a weight ratio of 68.8:30:1:0.1:0.1 (biodegradable resin: calcium carbonate: plasticizer:antioxidant #1: antioxidant #2) and kneaded at 175 °C. Then, the kneaded mixture was extruded using an extrusion molding machine equipped with a single screw, cut using a hot-cut-type pellet cutting machine, and cooled to prepare a pelletized biodegradable resin composition.

**Example 1-2**

The biodegradable resin, calcium carbonate, a plasticizer, the antioxidant #1, and the antioxidant #2 were fed into a kneader reactor in a weight ratio of 58.8:40:1:0.1:0.1 (biodegradable resin: calcium carbonate: plasticizer: antioxidant #1: antioxidant #2) and kneaded at 175 °C. Then, the kneaded mixture was extruded using an extrusion molding machine equipped with a single screw, cut using a hot-cut-type pellet cutting machine, and cooled to prepare a pelletized biodegradable resin composition.

**Example 1-3**

The biodegradable resin, calcium carbonate, a plasticizer, the antioxidant #1, and the antioxidant #2 were fed into a kneader reactor in a weight ratio of 49.8:49:1:0.1:0.1 (biodegradable resin: calcium carbonate: plasticizer: antioxidant #1: antioxidant #2) and kneaded at 175 °C. Then, the kneaded mixture was extruded using an extrusion molding machine equipped with a single screw, cut using a hot-cut-type pellet cutting machine, and cooled to prepare a pelletized biodegradable resin composition.

**Example 1-4**

The biodegradable resin, calcium carbonate, a plasticizer, the antioxidant #1, and the antioxidant #2 were fed into a kneader reactor in a weight ratio of 28.2:70:1.5:0.15:0.15 (biodegradable resin: calcium carbonate: plasticizer: antioxidant #1: antioxidant #2) and kneaded at 175 °C. Then, the kneaded mixture was extruded using an extrusion molding machine equipped with a single screw, cut using a hot-cut-type pellet cutting machine, and cooled to prepare a pelletized biodegradable resin composition.

**Example 1-5**

The biodegradable resin, calcium carbonate, a plasticizer, the antioxidant #1, the antioxidant #2, and a metal salt

were fed into a kneader reactor in a weight ratio of 68.79:30:1:0.1:0.1:0.01 (biodegradable resin: calcium carbonate: plasticizer: antioxidant #1: antioxidant #2:metal salt) and kneaded at 175 °C. Then, the kneaded mixture was extruded using an extrusion molding machine equipped with a single screw, cut using a hot-cut-type pellet cutting machine, and cooled to prepare a pelletized biodegradable resin composition.

**Comparative Example 1-1**

The biodegradable resin, a plasticizer, the antioxidant #1, and the antioxidant #2 were fed into a kneader reactor in a weight ratio of 98.8:1:0.1:0.1 (biodegradable resin: plasticizer: antioxidant #1: antioxidant #2) and kneaded at 175 °C. Then, the kneaded mixture was extruded using an extrusion molding machine equipped with a single screw, cut using a hot-cut-type pellet cutting machine, and cooled to prepare a pelletized biodegradable resin composition.

**Comparative Example 1-2**

The biodegradable resin, calcium carbonate, a plasticizer, the antioxidant #1, the antioxidant #2, and a metal salt were fed into a kneader reactor in a weight ratio of 88.7:10:1:0.1:0.1:0.1 (biodegradable resin: calcium carbonate: plasticizer: antioxidant #1: antioxidant #2:metal salt) and kneaded at 175 °C. Then, the kneaded mixture was extruded using an extrusion molding machine equipped with a single screw, cut using a hot-cut-type pellet cutting machine, and cooled to prepare a pelletized biodegradable resin composition

**First experimental example**

**Experimental Example 1-1**

Each of the pelletized biodegradable resin compositions prepared in Examples 1-1 to 1-5 and Comparative Examples 1-1 to 1-2 was dissolved in 65 wt% nitric acid, and then an element content therein was measured using inductively coupled plasma optical emission spectrometry (ICP-OES) under the following measurement conditions. Results are shown in Table 1 below.

[Measurement conditions]

- Apparatus: Agilent Co., 5110 SVDV
- RF power: 1.2 KW
- Nebulizer flow: 0.7 L/min
- Plasma flow: 12 L/min
- Aux flow: 1 L/min
- Read time: 5 s

[Table 1]

| | Example 1-1 | Example 1-2 | Example 1-3 | Example 1-4 | Example 1-5 | Comparative Example 1-1 | Comparative Example 1-2 |
|---|---|---|---|---|---|---|---|
| Unit | ppm | | | | | | |
| Al | 51 | 58 | 87 | 112 | 48 | 4 | 48 |
| Ca | 122,052 | 152,893 | 192,573 | 284,496 | 112,234 | 132 | 98.234 |
| Cd | <1 | <1 | <1 | <1 | <1 | <1 | <1 |
| Co | <1 | <1 | <1 | <1 | <1 | <1 | <1 |

(continued)

| | Example 1-1 | Example 1-2 | Example 1-3 | Example 1-4 | Example 1-5 | Comparative Example 1-1 | Comparative Example 1-2 |
|---|---|---|---|---|---|---|---|
| Unit | ppm | | | | | | |
| Cr | 1 | 1 | 5 | 4 | 1 | 2 | 11 |
| Cu | <1 | <1 | 1 | 1 | 1 | 1 | 1 |
| Fe | 35 | 39 | 52 | 78 | 182 | 11 | 1,150 |
| K | 13 | 16 | 24 | 32 | 15 | <1 | 11 |
| Mg | 646 | 768 | 1,008 | 1,433 | 589 | <1 | 585 |
| Mn | 6 | 8 | 9 | 13 | 6 | <1 | 6 |
| Na | 33 | 35 | 17 | 32 | 33 | 11 | 31 |
| Ni | <1 | <1 | <1 | <1 | <1 | <1 | <1 |
| P | 65 | 73 | 86 | 94 | 64 | 2 | 58 |
| Ti | 50 | 43 | 37 | 22 | 50 | 2 | 78 |
| Zn | 1 | 2 | 3 | 3 | 1 | 2 | 5 |

**Experimental Example 1-2**

< Manufacture of films>

Each of the pelletized biodegradable resin compositions prepared in Examples 1-1 to 1-5 and Comparative Examples 1-1 to 1-2 was placed on a flat stainless steel (SUS) plate with a width of 12 cm and a height of 12 cm, and a biodegradable resin sheet having an average thickness of 0.9 mm was manufactured at a temperature of 180 °C under a pressure of 20 Mpa. Then, the sheet was cut into 2 cm in width and 2 cm in length to prepare a sample of the biodegradable resin sheet.

<Manufacture of samples>

Each of the manufactured biodegradable films was cut to a size of 3 cm×3 cm, thereby manufacturing a sample.

<Biodegradability degree evaluation>

An inoculum container containing only compost (manufacturer: Taeheung F&G, product name: Jisengto (grade 1 compost, byproduct fertilizer)) was prepared, and separately, a test container containing the compost and each of samples, which was mixed in a content of 5 wt% based on the dry weight of the compost, was prepared. The inoculation vessel and the test vessel were cultured for 180 days under the conditions: 58±2°C, a moisture content of 50%, and an oxygen concentration of 6% or more. After capturing the $CO_2$ generated from each vessel, the amount of $CO_2$ generated from each vessel was measured by titration with an aqueous phenolphthalein solution. The biodegradability degree was calculated according to Equation 1 below, and results are shown in Table 2 below:

Biodegradability degree (%) = [($CO_2$ generation amount in test vessel) - ($CO_2$ generation amount in inoculation vessel)]/Theoretical $CO_2$ generation amount of biodegradable resin composition × 100 [Equation 1]

<Discoloration evaluation>

Each of the samples was placed in an autoclave and maintained at 80°C and a humidity of 100% for 24 hours, and then the yellowing degree (Y.I.) was measured using a colorimeter (ASTM E313, manufacturer: Intertek). Results are shown in Table 2 below.

<Soil fertility evaluation>

The biodegradable film of Example 1-1 was used as an agricultural mulching film to cover crops. The first crop

area covered with the biodegradable film and the second crop area covered with a polyethylene mulching film were each divided, and after two months, the crop growth rates in the first crop area and the second crop area were compared. Results are shown in FIG. 1.

[Table 2]

| | Examp le 1-1 | Examp le 1-2 | Examp le 1-3 | Examp le 1-4 | Examp le 1-5 | Comparati ve Example 1-1 | Comparati ve Example 1-2 |
|---|---|---|---|---|---|---|---|
| Biodegradabil ity degree(%) | 90 | 90 | 92 | 94 | 90 | 60 | 90 |
| Yellowing degree | 1.4 | 1.5 | 1.5 | 1.7 | 1.8 | 1.1 | 4.7 |

Referring to Tables 1 and 2 and FIG. 1, it was confirmed that Examples 1-1 to 1-5 contained minerals such as calcium, iron, magnesium, and manganese that can improve the soil environment, and contained almost no heavy metals such as cadmium and copper. In addition, Examples 1-1 to 1-5 showed that the biodegradability degree was improved due to minerals and that discoloration such as yellowing was not caused. In addition, it was confirmed that when Example 1-1 was used as a soil fertilization material, the crop growth rate increased compared to that in the polyethylene mulching film.

Comparative Example 1-1 contained a small amount of minerals, so that the biodegradability degree was significantly reduced compared to those in Examples 1-1 to 1-5, while Comparative Example 1-2 showed a significantly increased yellowing degree due to a high iron content therein.

**Second example**

- Biodegradable resin: Kingpa Co., A400
- Calcium carbonate: Omia Co.
- Chain extender: BASF Co., Joncryl
- Antioxidant #1: Phenol-based antioxidant, Adeca Korea Co., AO-60
- Antioxidant #2: Phosphorus-based antioxidant, Adeca Korea Co., 2112
- Lubricant: Stearyl stearate
- Metal salt: Iron nitrate
- Anti-hydrolysis agent: 3-glycidoxypropyl methyldiethoxysilane

**Examples 2-1 to 2-5 and Comparative Examples 2-1 to 2-2**

The compositions shown Table 3 below were fed into a kneader reactor and kneaded at 175°C. Next, the kneaded mixture was extruded using an extrusion molding machine equipped with a single screw, cut using a hot-cut-type pellet cutting machine, and cooled to prepare a pelletized biodegradable resin composition.

[Table 3]

| Classifica tion | Biodegrad able resin | Calciu m carbon ate | Chain exten der | Antioxid ant #1 | Antioxid ant #2 | Lubric ant | Met al salt | Anti-hydroly sis agent |
|---|---|---|---|---|---|---|---|---|
| Unit | wt % | | | | | | ppm | |
| Example 2-1 | Remainder | 47 | 0.2 | 0.05 | 0.15 | 1.5 | 70 | 600 |
| Example 2-2 | Remainder | 47 | 0.2 | 0.05 | 0.15 | 1.5 | 50 | 400 |
| Example 2-3 | Remainder | 47 | 0.2 | 0.05 | 0.15 | 1.5 | 90 | 800 |

(continued)

| Classifica tion | Biodegrad able resin | Calciu m carbon ate | Chain exten der | Antioxid ant #1 | Antioxid ant #2 | Lubric ant | Met al salt | Anti-hydroly sis agent |
|---|---|---|---|---|---|---|---|---|
| Unit | wt % | | | | | | ppm | |
| Example 2-4 | Remainder | 47 | 0.2 | 0.05 | 0.15 | 1.5 | 70 | 400 |
| Example 2-5 | Remainder | 47 | 0.2 | 0.05 | 0.15 | 1.5 | 40 | 200 |
| Comparat ive Example 2-1 | Remainder | - | 0.2 | 0.05 | 0.15 | 1.5 | - | - |
| Comparat ive Example 2-2 | Remainder | 5 | 0.2 | 0.05 | 0.15 | 1.5 | - | - |

## Second experimental example

<Manufacture of biodegradable sheets>

After preparing two Teflon sheets, a stainless steel (SUS) mold (area: 12 cm × 12 cm) was placed on one Teflon sheet, and about 7 g of each of the biodegradable resin pellets manufactured in Examples 2-1 to 2-5 and Comparative Examples 2-1 to 2-2 was put into the stainless steel (SUS) mold (area: 12 cm × 12 cm). Next, the mold was covered with another Teflon sheet, and placed in the center of a hot press (manufacturer: Widlab, model name: WL 1600SA) having a surface size of about 25 cm × 25 cm. The mold was maintained at about 210°C under a pressure of about 10 Mpa for about 3 minutes, and then detached, followed by immediately cooling in water of 20°C for about 30 seconds. Next, a biodegradable sheet having an area of about 10 cm × 10 cm and a thickness of about 300 μm was manufactured.

<Manufacture of biodegradable films>

After drying each of the biodegradable resin pellets manufactured in Examples 2-1 to 2-5 and Comparative Examples 2-1 to 2-2 at 80°C for 5 hours, melt extrusion was carried out at 160°C using Blown Film Extrusion Line (Manufacturer: YOOJIN ENGINEERING), thereby manufacturing a biodegradable polyester film having a thickness of 50 μm.

### Experimental Example 2-1 - Contents of iron and silicon

Each of the biodegradable sheets manufactured in Examples 2-1 to 2-5 and Comparative Examples 2-1 to 2-2 was dissolved in 65 wt% nitric acid, and the contents of iron and silicon were measured by ICP OES under the following conditions. Results are shown in Table 4 below.

- Apparatus: Agilent Co., 5110 SVDV
- RF power: 1.2 KW
- Nebulizer flow: 0.7 L/min
- Plasma flow: 12 L/min
- Aux fllow:1 L/min
- Read time: 5 s

[Table 4]

| Classification | Iron content | Silicon content |
|---|---|---|
| Unit | ppm | |
| Example 2-1 | 15 | 35 |
| Example 2-2 | 8 | 36 |
| Example 2-3 | 16 | 61 |
| Example 2-4 | 8 | 23 |

(continued)

| Classification | Iron content | Silicon content |
|---|---|---|
| Unit | ppm | |
| Example 2-5 | 6 | 22 |
| Comparative Example 2-1 | Not detected | Not detected |
| Comparative Example 2-2 | Not detected | Not detected |

**Experimental Example 2-2 - Acid value**

KOH and ethanol were mixed to prepare a 0.02N KOH solution. Next, each of the biodegradable sheets manufactured in Examples 2-1 to 2-5 and Comparative Examples 2-1 to 2-2 was dissolved in about 1 g of chloroform. Next, using phenolphthalein reagent as a reference, the biodegradable resin composition solution was titrated with the KOH solution, and the acid value was measured using a measuring device of Mettler Toledo Titrator Excellence T5. Results are shown in Table 5 below.

[Table 5]

| Classification | acid value |
|---|---|
| Unit | mg KOH/g |
| Example 2-1 | 1.05 |
| Example 2-2 | 2.15 |
| Example 2-3 | 1.33 |
| Example 2-4 | 2.06 |
| Example 2-5 | 1.95 |
| Comparative Example 2-1 | 2.60 |
| Comparative Example 2-2 | 3.90 |

**Experimental Example 2-3 - Hydrolysis degree**

The biodegradable sheets manufactured in Examples 2-1 to 2-5 and Comparative Examples 2-1 to 2-2 were immersed in 80°C water (100% RH), and then an accelerated hydrolysis test was carried out.

Specifically, 5 g of each of the biodegradable sheets manufactured in Examples 2-1 to 2-5 and Comparative Examples 2-1 to 2-2 was added to 500 mL of deionized water (DI Water), and then blocked with a stopper to prevent water from evaporating and subjected to an accelerated hydrolysis test in an 80°C convection (hot air) oven. The humidity environment of the biodegradable sheet is the same as that at 100% RH because it is created by immersion in water.

After 7, 14, 21, 28, 42, and 63 days, the number average molecular weight was measured using gel permeation chromatography (GPC) under the following conditions. A hydrolysis degree was derived by dividing a difference between an initial number average molecular weight and each of the number average molecular weights after 7, 14, 21, 28, 42, and 63 days by the initial number average molecular weight. Results are shown in Table 6 below.

- Sample pretreatment: 0.035 mg of PBAT chip was dissolved in 1.5 ml of THF
- Measurement apparatus: e2695 manufactured by Waters
- Flow rate: 1 ml/min in THF
- Flow amount: 50 $\mu\ell$
- Column temperature: 40°C
- Detector: ELSD
- Column: Styragel Column HR 5E, HR4, HR2

[Table 6]

| Classificatio n | Hydrolysi s degree after 7 days | Hydrolysi s degree after 14 days | Hydrolysi s degree after 21 days | Hydrolysi s degree after 28 days | Hydrolysi s degree after 42 days | Hydrolysi s degree after 63 days |
|---|---|---|---|---|---|---|
| Unit | % | | | | | |
| Example 2-1 | 47 | 87 | 94 | 95 | 97 | 97 |
| Example 2-2 | 57 | 89 | 94 | 96 | 97 | 97 |
| Example 2-3 | 47 | 87 | 94 | 95 | 96 | 97 |
| Example 2-4 | 51 | 88 | 94 | 96 | 97 | 97 |
| Example 2-5 | 58 | 89 | 94 | 96 | 97 | 97 |
| Comparative Example 2-1 | 45 | 86 | 93 | 95 | 96 | 96 |
| Comparative Example 2-2 | 65 | 90 | 95 | 97 | 97 | 97 |

**Experimental Example 2-4 - Biodegradability degree**

Each of the biodegradable films manufactured in Examples 2-1 to 2-5 and Comparative Examples 2-1 to 2-2 was mixed with the following compost, and was subjected to a biodegradation acceleration test at 60°C and a humidity of 90%. The same gel permeation chromatography (GPC) as in Experimental Example 2-3 was used, and the number average molecular weight was measured after 7, 14, 21, 28, 42, and 63 days. The biodegradability degree was derived by dividing the difference between an initial number average molecular weight and each of the number average molecular weights after 7, 14, 21, 28, 42, and 63 days by the initial number average molecular weight. Results are shown in Table 7 below.

- Compost manufacturer: Taeheung F&G
- Product Name: Jisaengto (by-product fertilizer grade 1 compost)
- Compost components: 40 wt% of pig manure, 15 wt% of chicken manure, 37 wt% of sawdust, 5 wt% of zeolite, 3 wt% of microbial agent

[Table 7]

| Classific ation | Biodegrad ability degree after 7 days | Biodegrad ability degree after 14 days | Biodegrad ability degree after 21 days | Biodegrad ability degree after 28 days | Biodegrad ability degree after 42 days | Biodegrad ability degree after 63 days |
|---|---|---|---|---|---|---|
| Unit | % | | | | | |
| Example 2-1 | 52 | 61 | 70 | 78 | 87 | 90 |
| Example 2-2 | 55 | 65 | 72 | 78 | 89 | 91 |
| Example 2-3 | 52 | 60 | 70 | 78 | 87 | 90 |
| Example 2-4 | 55 | 62 | 71 | 79 | 86 | 90 |
| Example 2-5 | 55 | 63 | 72 | 79 | 87 | 92 |
| Comparative Example 2-1 | 46 | 52 | 65 | 74 | 82 | 85 |

(continued)

| Classification | Biodegradability degree after 7 days | Biodegradability degree after 14 days | Biodegradability degree after 21 days | Biodegradability degree after 28 days | Biodegradability degree after 42 days | Biodegradability degree after 63 days |
|---|---|---|---|---|---|---|
| Unit | % | | | | | |
| Comparative Example 2-2 | 62 | 71 | 79 | 84 | 89 | 92 |

As shown in Tables 4 to 7, the biodegradable resin compositions according to Examples 2-1 to 2-5 can have appropriate hydrolysis degrees and biodegradability degrees. That is, it was confirmed that the biodegradable resin compositions according to Examples 2-1 to 2-5 have high final biodegradability degrees while having low initial hydrolysis degrees.

[Industrial Applicability]

Embodiments can be applied to a method of preparing a biodegradable resin composition, a biodegradable resin composition prepared by the method, and a biodegradable molded article including the biodegradable resin composition.

## Claims

**1.** A biodegradable resin composition, comprising:

a biodegradable resin;
an inorganic filler; and
one or more selected from the group consisting of iron, magnesium, manganese and calcium,
wherein a content of the inorganic filler is 30 wt% or more based on a total weight of the biodegradable resin composition.

**2.** The biodegradable resin composition according to claim 1, wherein the biodegradable resin composition further comprises one or more selected from the group consisting of aluminum, cobalt, potassium, sodium, and phosphorus.

**3.** The biodegradable resin composition according to claim 1, wherein a content of the iron is 1 ppm to 200 ppm based on the total weight of the biodegradable resin composition.

**4.** The biodegradable resin composition according to claim 1, wherein a content of the magnesium is 100 ppm or more based on the total weight of the biodegradable resin composition.

**5.** The biodegradable resin composition according to claim 1, wherein a content of the manganese is 3 ppm or more based on the total weight of the biodegradable resin composition.

**6.** The biodegradable resin composition according to claim 1, wherein a content of the calcium is $1\times10^5$ ppm or more based on the total weight of the biodegradable resin composition.

**7.** The biodegradable resin composition according to claim 1, wherein a content of the cadmium in the biodegradable resin composition is less than 1 ppm based on the total weight of the biodegradable resin composition.

**8.** A biodegradable resin composition, comprising:

a biodegradable resin;
an inorganic filler;
a metal salt; and
an anti-hydrolysis agent,
wherein a content of the inorganic filler is 30 wt% or more based on the total weight of the biodegradable resin composition.

**9.** The biodegradable resin composition according to claim 8, wherein the metal salt comprises iron.

**10.** The biodegradable resin composition according to claim 8, wherein the anti-hydrolysis agent comprises silicon.

**11.** The biodegradable resin composition according to claim 10, wherein a content of the silicon is 1 ppm to 300 ppm based on a total weight of the biodegradable resin composition.

**12.** The biodegradable resin composition according to claim 8, wherein a hydrolysis degree after 1 week of the biodegradable resin composition is 35 % to 60 %, a hydrolysis degree after 3 weeks thereof is 85 % or more, and the hydrolysis degree after 1 week and the hydrolysis degree after 3 weeks are measured by Measurement Method 1 below:
[Measurement Method 1]

The hydrolysis degree after 1 week is a reduction rate compared to an initial number average molecular weight of the biodegradable resin composition when the biodegradable resin composition is placed for 1 week under high-temperature and high-humidity conditions of 80 °C and 100% humidity, and
the hydrolysis degree after 3 weeks is a reduction rate compared to the initial number average molecular weight of the biodegradable resin composition when the biodegradable resin composition is placed for 3 weeks under high-temperature and high-humidity conditions of 80 °C and 100% humidity.

**13.** A biodegradable molded article, comprising:

a biodegradable resin;
an inorganic filler; and
one or more selected from the group consisting of iron, magnesium, manganese and calcium,
wherein a content of the inorganic filler is 30 wt% or more based on a total weight of the biodegradable resin composition.

**14.** The biodegradable molded article according to claim 13, wherein the biodegradable molded article is a soil fertilization material.

**15.** A biodegradable molded article, comprising:

a biodegradable resin;
an inorganic filler;
a metal salt; and
an anti-hydrolysis agent,
wherein a content of the inorganic filler is 30 wt% or more based on a total weight of the biodegradable resin composition.

【FIG. 1】

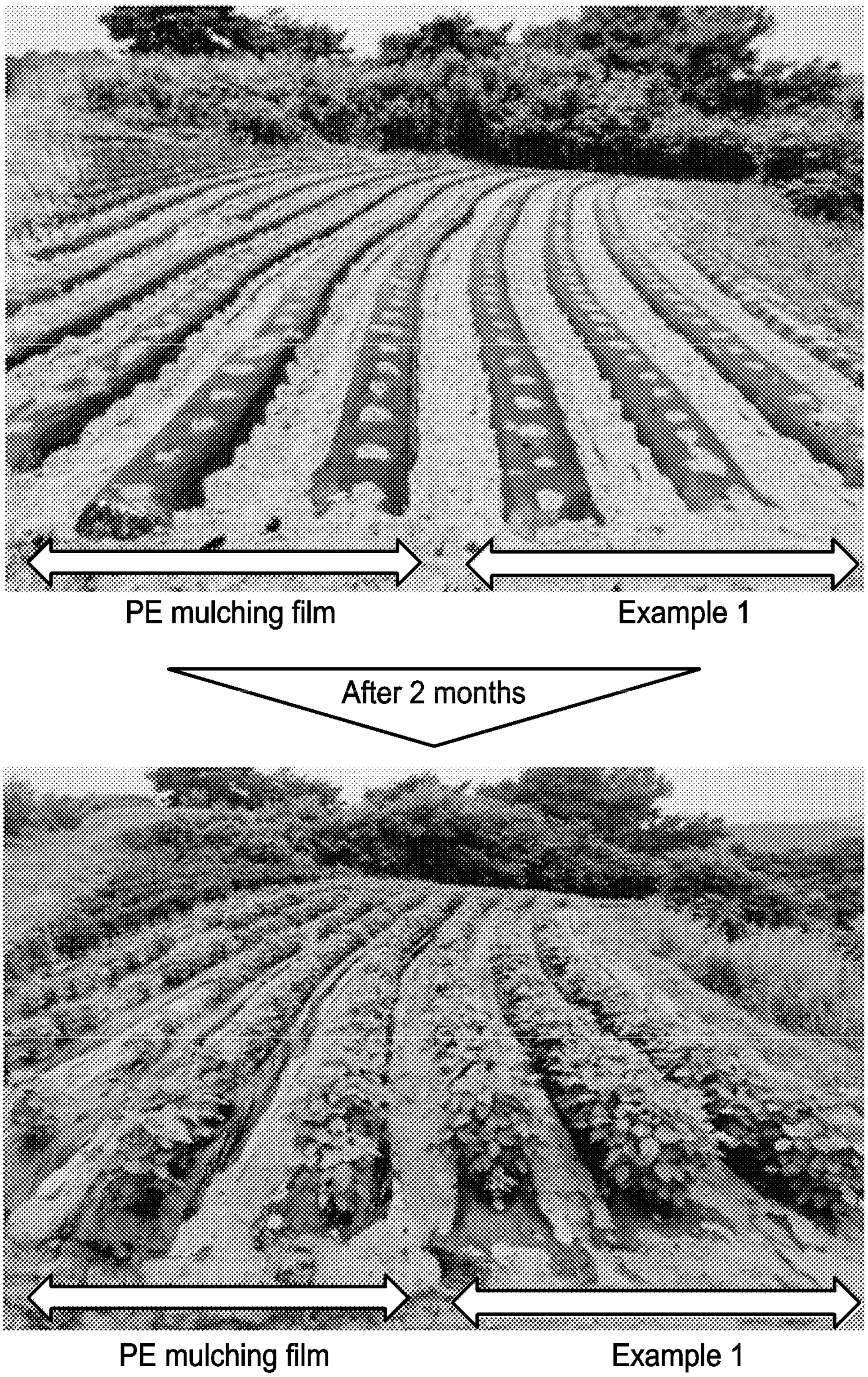
PE mulching film
Example 1
After 2 months
PE mulching film
Example 1

**INTERNATIONAL SEARCH REPORT**

International application No.
**PCT/KR2023/010801**

**A. CLASSIFICATION OF SUBJECT MATTER**

**C08K 13/02**(2006.01)i; **C08K 5/5435**(2006.01)i; **C08K 3/013**(2018.01)i; **C08K 3/26**(2006.01)i; **C08K 3/28**(2006.01)i; **C08K 5/10**(2006.01)i; **C08K 5/00**(2006.01)i; **C08K 5/13**(2006.01)i; **C08K 5/49**(2006.01)i; **C08L 67/02**(2006.01)i

According to International Patent Classification (IPC) or to both national classification and IPC

**B. FIELDS SEARCHED**

Minimum documentation searched (classification system followed by classification symbols)

C08K 13/02(2006.01); A01G 13/00(2006.01); A01K 69/06(2006.01); B29C 48/00(2019.01); B29C 48/08(2019.01); C08K 3/013(2018.01); C08L 3/02(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성(biodegradable), 수지조성물(resin composition), 무기충전제(inorganic filler), 금속(metal), 금속염(metal salt)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0047171 A (AU CO., LTD. et al.) 07 May 2020 (2020-05-07)<br>See claims 1 and 6-8, and paragraphs [0010]-[0014]. | 1-15 |
| Y | KR 10-2013-0075997 A (DAESANG CORPORATION) 08 July 2013 (2013-07-08)<br>See claims 1, 8 and 9, and paragraphs [0022]-[0024] and [0057]-[0059]. | 1-7,13,14 |
| Y | KR 10-2022-0015623 A (SKC CO., LTD.) 08 February 2022 (2022-02-08)<br>See claim 1, and paragraphs [0047] and [0057]-[0059]. | 8-12,15 |
| A | KR 10-2320029 B1 (GANG, Sin Ju) 29 October 2021 (2021-10-29)<br>See claims 1-7. | 1-15 |
| A | KR 10-2019-0018131 A (HARM, Jiyeon) 21 February 2019 (2019-02-21)<br>See claims 1-20. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2023** | **15 November 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/010801**

| Patent document cited in search report | | | Publication date (day/month/year) | Patent family member(s) | | | Publication date (day/month/year) |
|---|---|---|---|---|---|---|---|
| KR | 10-2020-0047171 | A | 07 May 2020 | KR | 10-2198513 | B1 | 05 January 2021 |
| KR | 10-2013-0075997 | A | 08 July 2013 | KR | 10-1366695 | B1 | 28 February 2014 |
| KR | 10-2022-0015623 | A | 08 February 2022 | CN | 113736069 | A | 03 December 2021 |
| | | | | CN | 113736069 | B | 22 September 2023 |
| | | | | EP | 3916036 | A1 | 01 December 2021 |
| | | | | JP | 2021-188038 | A | 13 December 2021 |
| | | | | JP | 7282124 | B2 | 26 May 2023 |
| | | | | KR | 10-2021-0147332 | A | 07 December 2021 |
| | | | | KR | 10-2021-0147334 | A | 07 December 2021 |
| | | | | KR | 10-2022-0011817 | A | 03 February 2022 |
| | | | | KR | 10-2022-0063901 | A | 18 May 2022 |
| | | | | KR | 10-2410615 | B1 | 17 June 2022 |
| | | | | KR | 10-2410620 | B1 | 17 June 2022 |
| | | | | KR | 10-2421034 | B1 | 14 July 2022 |
| | | | | KR | 10-2527599 | B1 | 02 May 2023 |
| | | | | US | 2021-0380757 | A1 | 09 December 2021 |
| | | | | WO | 2021-241931 | A1 | 02 December 2021 |
| KR | 10-2320029 | B1 | 29 October 2021 | | None | | |
| KR | 10-2019-0018131 | A | 21 February 2019 | KR | 10-1889224 | B1 | 17 August 2018 |
| | | | | KR | 10-2234108 | B1 | 31 March 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9096758 B
- US 4797468 A
- US 5470944 A
- US 5770682 A
- US 5821327 A
- US 5880254 A
- US 6326458 B

### Non-patent literature cited in the description

- *J. Bacteriol*, 1997, vol. 179, 4821